# EUROPEAN PATENT SPECIFICATION

(11) **EP 4 421 551 B1**
(45) Date of publication and mention of the grant of the patent: **26.11.2025**
(21) Application number: 24156497.0
(22) Date of filing: 08.02.2024
(51) Int. Cl.: G02B 26/08

(54) **MEMS DEVICE, IN PARTICULAR OF MIRROR TYPE, WITH IMPROVED DETECTION OF THE DEFORMATION OF A DEFORMABLE STRUCTURE OF THE SAME, AND MANUFACTURING PROCESS OF THE MEMS DEVICE**
MEMS-VORRICHTUNG, INSBESONDERE SPIEGELVORRICHTUNG, MIT VERBESSERTER ERKENNUNG DER VERFORMUNG EINER VERFORMBAREN STRUKTUR UND HERSTELLUNGSVERFAHREN DER MEMS-VORRICHTUNG
DISPOSITIF MEMS, NOTAMMENT DE TYPE MIROIR, À DÉTECTION AMÉLIORÉE DE LA DÉFORMATION D'UNE STRUCTURE DÉFORMABLE DE CELUI-CI, ET PROCÉDÉ DE FABRICATION DU DISPOSITIF MEMS

(30) Priority: 27.02.2023 IT 202300003498
(43) Date of publication of application: 28.08.2024
(73) Proprietor: STMicroelectronics International N.V., 1228 Plan-les-Ouates, Geneva (CH)
(72) Inventor: CARMINATI, Roberto, 25052 PIANCOGNO (BS) (IT); AFIFI AFIFI, Tarek, 20155 MILANO (IT); PRELINI, Carlo Luigi, 20822 SEVESO (MB) (IT); COSTANTINI, Sonia, 23873 MISSAGLIA (LC) (IT)
(74) Representative: Studio Torta S.p.A.

(56) References cited:
- EP-A1- 4 075 184
- CN-A- 108 761 773
- US-A1- 2021 347 634

## Description

### TECHNICAL FIELD

The present invention relates to a MEMS device, in particular of mirror type, with improved detection of the deformation of a deformable structure of the same, and manufacturing process of the MEMS device. In particular, it relates to a MEMS device comprising a deformable structure which includes a piezoelectric actuator, for controlling the deformation of the deformable structure, and a strain sensor, for improved detection of the deformation of the deformable structure. It also relates to a manufacturing process of the MEMS device, to an operating method of the MEMS device and to an electronic apparatus comprising the MEMS device.

### STATE OF THE ART

As is known, currently micro-electro-mechanical systems (MEMS) devices are commonly used and marketed comprising a tiltable structure, for example a mirror structure, formed with the technology of semiconductor materials.

For example, MEMS devices having mirror structure are for example used in portable apparatuses, such as portable computers, laptops, notebooks (comprising ultra-thin notebooks), PDAs, tablets, smartphones, for optical applications. In particular, they may be used to direct in desired modes light radiation beams generated by a light source in on-screen or LIDAR-type display applications.

Thanks to their small size, these devices allow meeting stringent requirements as regards the space occupation, both in terms of area and thickness.

For example, MEMS mirror devices are used in miniaturized projector modules (so-called picoprojectors), capable of projecting images at a distance or generating desired light patterns.

MEMS mirror devices generally include a mirror element suspended over a cavity and a deformable structure which elastically couples the mirror element to an anchoring structure of the MEMS mirror device. The mirror element is formed starting from a semiconductor material body in such a way as to be movable, typically with a tilting or rotation movement, to direct the impinging light beam in a desired manner. Generally, the mirror element is controlled and rotated by piezoelectric- or capacitive-type actuators, being part of the deformable structure.

In order to allow better control of the mirror element and, accordingly, of the light beam directed thereby, it is known to couple one or more strain sensors, configured to detect the deformation of the deformable structure, to the mirror element in order to allow the position of the mirror element to be determined. This allows, for example, the mirror element to be controlled in closed-loop mode, operating the actuators as a function of the detected position of the mirror element. Accordingly, the use of strain sensors allows a more accurate control of the position of the mirror element.

For this purpose, there is known, for example, using piezoresistive sensors to detect the position of the mirror element. In particular, the piezoresistive sensors comprise sensitive elements of semiconductor material (e.g., silicon) whose electrical resistance is a function of a mechanical deformation of these sensitive elements. Accordingly, when the actuators generate a movement of the mirror element, they also cause the mechanical deformation of the sensitive elements which is detected as a voltage/current variation across the sensitive elements. However, piezoresistive sensors have low measurement sensitivities (e.g., lower than about 3 mV/deg), high electrical consumption, require additional manufacturing steps and therefore higher production costs and times, and are highly dependent on temperature variations (e.g., -0.25%/°C). Because of this, using piezoresistive sensors requires complex calibration procedures to balance the thermal effects to which these sensors may be subject, and in general causes the measurement accuracy to be limited.

Other known solutions are based on the use of a piezoelectric sensor with "single-ended" reading to detect the position of the mirror element. The piezoelectric sensor comprises a respective sensitive element of piezoelectric insulating material (e.g., lead zirconate-titanate, PZT, or aluminum nitride, AlN) which biases, thus generating a potential difference thereacross, when subject to a mechanical deformation generated by the actuators to control the mirror element. Known solutions comprise reading this potential difference in "single-ended" mode, i.e. amplifying the potential difference, converting it into a respective digital signal by an ADC converter and using this digital signal to determine the position of the mirror element and/or to control the "closed-loop" position thereof.

Similarly, there are also known solutions based on the use of multiple piezoelectric sensors with differential reading to detect the position of the mirror element. For example, these piezoelectric sensors have a structure similar to that described for the "single-ended" reading case and are arranged symmetrically with respect to the mirror element in such a way as to measure, in use, electrical signals which are in phase-opposition to each other and which therefore may be acquired in differential mode so as to improve the measurement sensitivity and increase the SNR, respectively in the "single-ended" case.

However, in both cases the piezoelectric sensors are generally formed, laterally to the actuators which are usually of piezoelectric type for easier integration in the manufacturing step with the piezoelectric sensors, or by manufacturing process steps which are additional with respect to those used to form the actuators or by the same manufacturing process steps used to form the actuators.

In the first case, this entails a greater complexity of the manufacturing process due to the greater number of manufacturing steps and lithographic masks necessary to form the device.

In the second case, this entails that the strain sensors and the actuators necessarily have similar physical structures (i.e. the vertical succession of the layers which form them is the same for both the strain sensors and the actuators). Furthermore, the piezoelectric insulating material portions used by the actuators to generate the movement of the mirror element and the piezoelectric insulating material portions used by the piezoelectric sensors to detect the movement of the mirror element are part of a same piezoelectric insulating material layer, i.e. are formed starting from the same piezoelectric insulating material (e.g., PZT) layer which is first deposited and then patterned to form the different portions used for the different detection or actuation uses. This generates an additional limit in the device design, as the piezoelectric insulating material used for detecting and actuating is to be the same for both actuators and piezoelectric sensors. This limit is particularly relevant when piezoelectric insulating materials such as PZT are chosen, as this prevents obtaining a device wherein both actuation and detection are optimized. In fact, the PZT is known to become unstable over time due to phenomena such as piezoelectric fatigue and "depoling", which may significantly affect the detection of the position of the mirror element. Furthermore PZT has hysteresis and also has a high dielectric constant (e.g., comprised between about 1000 C²/(N·m²) and about 1200 C²/(N·m²)). Thus, although PZT does not have relevant problems when used for actuation purposes (where the contact areas between PZT and respective electrodes are generally large), this material may be limiting when used for detection purposes (where the contact areas between PZT and respective electrodes are generally reduced) since it may lead to an excessively noisy and inaccurate measurement and to an excessive reduction of the SNR and of the amplitude of the output signal generated by the strain sensor.

Document EP 4 075 184 A1 relates to a MEMS device with tiltable structure and improved control.

Document US 2021/347634 A1 relates to a piezoelectric actuator provided with a deformable structure having improved mechanical properties and to the fabrication method thereof.

Document CN 108 761 773 A relates to a piezoelectric non-uniform folded beam driven MOEMS scanning grating micromirror, belonging to the field of spectral analysis and micro-optical electromechanical systems.

The aim of the present invention is to provide a MEMS device, a manufacturing process of the MEMS device, an operating method of the MEMS device and an electronic apparatus comprising the MEMS device, which overcome the drawbacks of the prior art.

### SUMMARY OF THE INVENTION

According to the present invention there are provided a MEMS device, a manufacturing process of the MEMS device, an operating method of the MEMS device and an electronic apparatus comprising the MEMS device, as defined in the annexed claims.

### BRIEF DESCRIPTION OF THE DRAWINGS

For a better understanding of the present invention, a preferred embodiment is now described, purely by way of non-limiting example, with reference to the attached drawings, wherein:
- Figure 1 schematically represents a lateral sectional view with suspended parts of a MEMS device provided with a tiltable structure and two deformable structures, according to a schematic embodiment;
- Figures 2 and 3 are top views of respective embodiments of the MEMS device of Figure 1;
- Figures 4 and 5 are lateral sectional views with suspended parts illustrating details of the MEMS device of Figure 1, according to respective embodiments;
- Figures 6A-6R are lateral sectional views illustrating steps of a manufacturing process of the MEMS device of Figure 1;
- Figures 7 and 8 are lateral sectional views with suspended parts illustrating details of the MEMS device of Figure 1, according to further embodiments; and
- Figure 9 is a block diagram which schematically shows an electronic apparatus comprising the MEMS device of Figure 1.

In particular, the Figures are shown with reference to a triaxial Cartesian system defined by an axis X, an axis Y and an axis Z, orthogonal to each other.

In the following description, elements common to the different embodiments have been indicated with the same reference numerals.

### DETAILED DESCRIPTION OF THE INVENTION

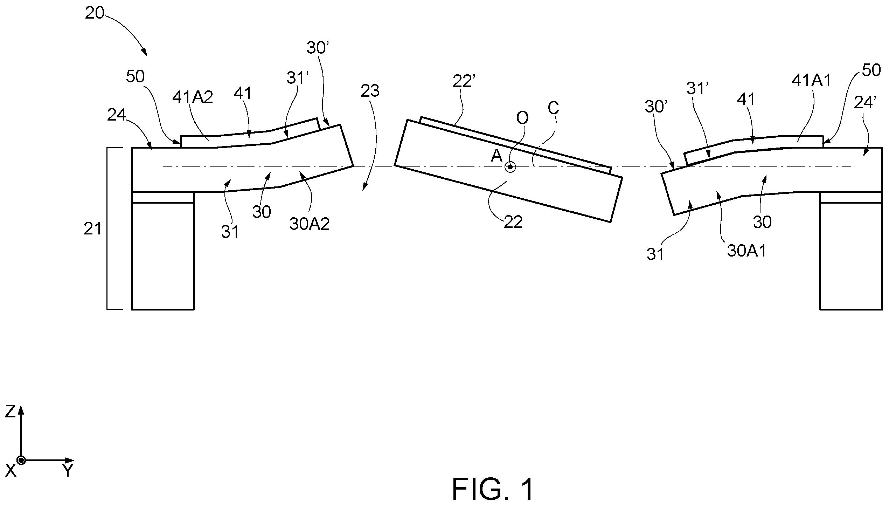

Figure 1 schematically shows, in lateral sectional view in a plane YZ defined by the axes Y and Z, a MEMS device 20, in particular a MEMS mirror device.

The MEMS device 20 is formed in a semiconductor body 21. For example, the semiconductor body 21 may be a die of semiconductor material, in particular mono- or polycrystalline silicon, or a double structural layer, for example formed by a SOI (Silicon On Insulator) wafer.

The MEMS device 20 is provided with a tiltable structure 22, having main extension in a horizontal plane XY, defined by the axes X and Y, and arranged so as to rotate around a rotation axis A, parallel to the axis X.

The rotation axis A also represents a first symmetry median axis for the MEMS device 20, therefore also indicated by A; a second symmetry median axis C for the MEMS device 20 is parallel to the axis Y and passing through a center O of the tiltable structure 22.

The tiltable structure 22 is suspended above a cavity 23 formed in the semiconductor body 21 by a fixed structure 24 of the semiconductor body 21, which delimits the cavity 23. The tiltable structure 22 carries at the top a reflective surface 22' of the MEMS device 20, so as to define a mirror structure comprising the tiltable structure 22 and the reflective surface 22'. The reflective surface 22' is of material suitable for the application of the MEMS device 20, for example it is of aluminum or gold, depending on whether the projection is in the visible or in the infrared.

The tiltable structure 22 is elastically coupled to an anchoring structure, here formed by a frame portion 24' of the fixed structure 24, by means of a support structure comprising a first and a second support arm, not shown in Figure 1 because extending longitudinally along the first symmetry median axis A, above the cavity 23, between the frame portion 24' of the fixed structure 24 and the tiltable structure 22, on opposite sides thereof. The support arms are equal to each other and arranged symmetrically with respect to the second symmetry median axis C.

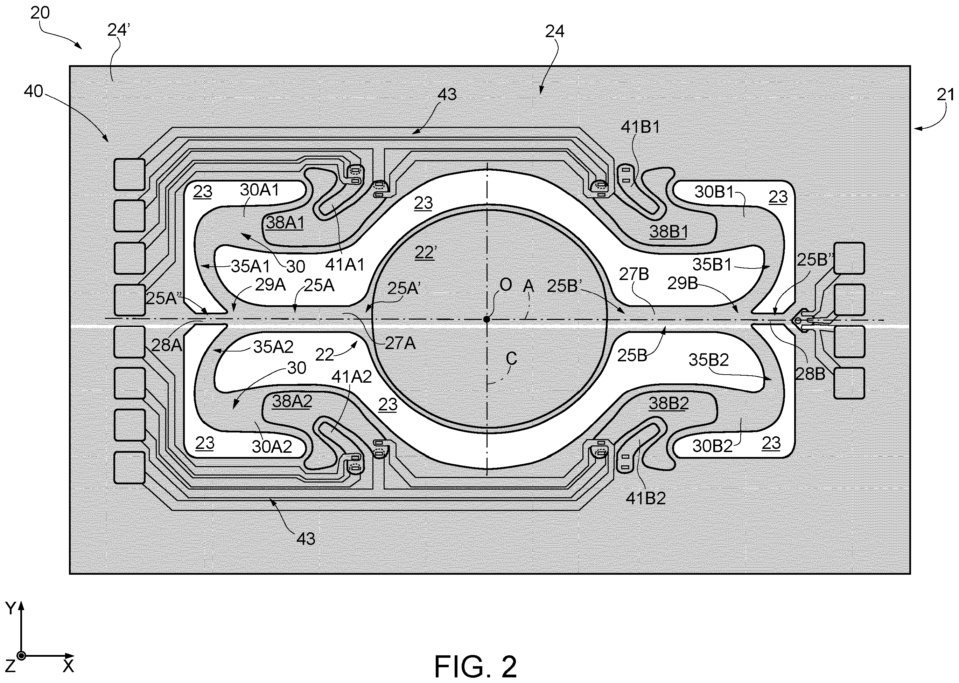

The MEMS device 20 further comprises a plurality of deformable structures 30 which, as shown in greater detail in Figure 2, extend between the fixed structure 24 of the semiconductor body 21 and the mirror structure, on sides of the latter opposite to each other along the axis Y and having the respective deformable structures 30 facing thereon. In particular, the deformable structures 30 have a symmetrical structure with respect to the first symmetry median axis A.

The deformable structures 30 are coupled to the fixed structure 24 so as to be suspended above the cavity 23.

Each of them comprises a respective deformable main body 31, which is part of the semiconductor body 31 and is suspended above the cavity 23. Each deformable main body 31 is for example of semiconductor material. Each deformable main body 31 has a respective top surface 31' which is not arranged facing the cavity 23, i.e. which is arranged facing the opposite side of the deformable main body 31 with respect to the cavity 23.

Furthermore, the deformable main body 31 has a first and a second end, opposite to each other and not shown. The first end of the deformable main body 31 is fixed (therefore constrained) to the fixed structure 24 and the second end of the deformable main body 31 is fixed to the tiltable structure 22 and is suspended on the cavity 23 so as to be able to move relative to the fixed structure 24 (e.g., so as to be able to oscillate on the cavity 23).

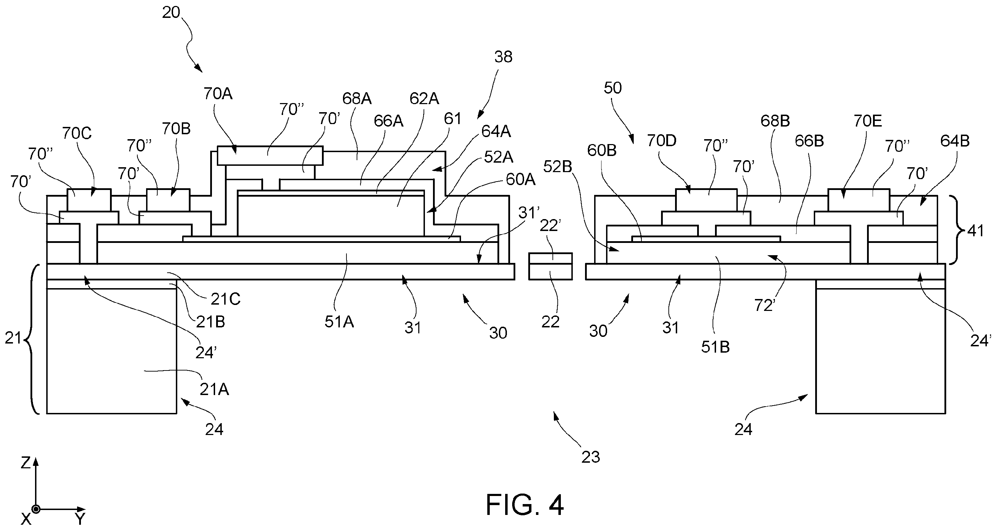

The deformable structures 30 also include, at their top surfaces 30' (not arranged facing the cavity 23), respective piezoelectric actuators of the MEMS device 20, not shown in Figure 1 but indicated hereinafter with the reference 38 (e.g., as shown in Figure 4). The piezoelectric actuators 38 are electrically controllable to cause a mechanical deformation of the actuation structures which induces a torsion of the support arms around the first symmetry median axis A and, therefore, a displacement of the mirror structure (in detail, a rotation of the tiltable structure 22 around the first symmetry median axis A).

In particular, each piezoelectric actuator 38 extends over the top surface 31' of the respective deformable main body 31, integrally with the deformable main body 31. Therefore, each piezoelectric actuator 38 is arranged facing the opposite side of the deformable main body with respect to the cavity 23.

Furthermore, the deformable structures 30 also include, at the top surfaces 30', respective piezoelectric sensor elements (indicated in Figure 1 with the references 41A1 and 41A2 and, more generally, with the reference 41 as for example shown in Figure 4). The piezoelectric sensor elements 41 form, together with the respective deformable main bodies 31 whereon they extend, respective strain sensors 50 of piezoelectric type, as better discussed hereinbelow.

In particular, each piezoelectric sensor element 41 extends on the top surface 31' of the respective deformable main body 31, integrally with the deformable main body 31 and so as to also be suspended on the cavity 23. Therefore, each piezoelectric sensor element 41 is arranged facing the opposite side of the deformable main body with respect to the cavity 23.

In more detail, the piezoelectric sensor elements 41 extend symmetrically with respect to the first symmetry median axis A.

Figure 2 schematically shows the MEMS device 20, according to an embodiment similar to that shown in Figure 1 and wherein the MEMS device 20 is designed to operate in a dynamic regime (i.e. in resonance, at rotation frequencies of the tiltable structure 22 higher than 10kHz).

The MEMS device 20 is formed in the semiconductor body 21 and is provided with the tiltable structure 22.

The tiltable structure 22 is suspended above the cavity 23 and carries at the top the reflective surface 22' which has, in the illustrated embodiment, a generically circular shape in the plane XY (although other shapes are possible, from an elliptical shape to a polygonal, for example square or rectangular, shape).

The tiltable structure 22 is elastically coupled to the frame portion 24' of the fixed structure 24 by means of the support structure comprising the first and the second support arms, indicated in Figure 2 with the references 25A, 25B. The support arms 25A, 25B extend longitudinally along the first symmetry median axis A, above the cavity 23, between the frame portion 24' of the fixed structure 24 and the tiltable structure 22, on opposite sides thereof. The support arms 25A, 25B are equal to each other and arranged symmetrically with respect to the second symmetry median axis C.

In detail, the first support arm 25A has a first end 25A' rigidly coupled to the tiltable structure 22 and a second end 25A" rigidly coupled to the frame portion 24' of the fixed structure 24 and comprises a first and a second torsional spring 27A, 28A. The first and the second torsional springs 27A, 28A have a linear shape, extend in continuation with each other along the first symmetry median axis A between a first side of the tiltable structure 22 and a first side of the frame portion 24' of the fixed structure 24.

The second support arm 25B has a first end 25B' rigidly coupled to the tiltable structure 22 and a second end 25B" rigidly coupled to the frame portion 24' of the fixed structure 24 and comprises a third and a fourth torsional spring 27B, 28B. The third and the fourth torsional springs 27B, 28B extend in continuation with each other along the first symmetry median axis A between a second side, opposite to the first, of the tiltable structure 22 and a second side, opposite to the first, of the frame portion 24' of the fixed structure 24.

In detail, the torsional springs 27A, 27B, 28A, 28B each have a linear beam shape rigid for movements outside the plane XY and yielding to torsion around the first symmetry median axis A.

In the first support arm 25A, the first and the second torsional springs 27A, 28A are connected to each other at a first constraint structure 29A, that is rigid; in the second support arm 25B, the third and the fourth torsional springs 27B, 28B are connected to each other at a second constraint structure 29B, that is rigid.

The MEMS device 20 further comprises the plurality of deformable structures 30, in particular at least a first and a second deformable structure 30A1 and 30A2 which extend between the frame portion 24' of the fixed structure 24 and the first constraint structure 29A, on a first and, respectively, a second side of the first support arm 25A, and which have a symmetrical structure with respect to the first symmetry median axis A. In detail, the first deformable structure 30A1 is coupled to the first constraint structure 29A through a coupling region 35A1 of the first deformable structure 30A1, extending along a main extension direction transverse with respect to a main extension direction of the remaining portion of the first deformable structure 30A1; similarly, the second deformable structure 30A2 is coupled to the first constraint structure 29A through a coupling region 35A2 of the second deformable structure 30A2, which extends along a respective main extension direction transverse with respect to a main extension direction of the remaining portion of the second deformable structure 30A2.

In Figure 2, the plurality of deformable structures 30 further comprises a third and a fourth deformable structure 30B1 and 30B2, extending between the frame portion 24' of the fixed structure 24 and the second constraint structure 29B, on a first and, respectively, a second side of the second support arm 25B. The third and the fourth deformable structures 30B1 and 30B2 have a structure symmetrical to each other with respect to the first symmetry median axis A. In detail, the third deformable structure 30B1 is coupled to the second constraint structure 29B by a coupling region 35B1 of the third deformable structure 30B1, which extends along a respective main extension direction transverse with respect to a main extension direction of the remaining portion of the third deformable structure 30B1; similarly, the fourth deformable structure 30B2 is coupled to the second constraint structure 29B by a coupling region 35B2 of the fourth deformable structure 30B2 which extends along a respective main extension direction transverse with respect to a main extension direction of the remaining portion of the fourth deformable structure 30B2.

The deformable structures 30A1, 30A2, 30B1 and 30B2 are suspended above the cavity 23 and include, at their top surfaces 30', the respective piezoelectric actuators 38, indicated in more detail in Figure 2 with the respective references 38A1, 38A2, 38B1, 38B2. In particular, the piezoelectric actuators 38A1, 38A2, 38B1, 38B2 are based on the inverse piezoelectric effect and have a structure which is better discussed hereinbelow.

Furthermore, the deformable structures 30A1, 30A2, 30B1 include, at their top surfaces 30', the plurality of piezoelectric sensor elements 41. In particular, they comprise the first and the second piezoelectric sensor elements 41A1 and 41A2.

The first and the second piezoelectric sensor elements 41A1 and 41A2 extend, for example, over the deformable main bodies 31 of the first and, respectively, the second deformable structure 30A1, 30A2 (alternatively and in a manner not shown, they extend over the deformable main bodies 31 of the third and, respectively, the fourth deformable structure 30B1, 30B2). By way of non-limiting example, the first and the second piezoelectric sensor elements 41A1 and 41A2 extend at the frame portion 24' of the fixed structure 24.

Optionally, the plurality of piezoelectric sensor elements further comprises a third and a fourth piezoelectric sensor element 41B1 and 41B2 extending over the deformable main bodies 31 of the third and, respectively, the fourth deformable structure 30B1, 30B2. For example, the third and the fourth piezoelectric sensor elements 41B1 and 41B2 extend at the frame portion 24' of the fixed structure 24. In detail, if the third and the fourth piezoelectric sensor elements 41B1 and 41B2 are also present, they may be electrically connected in series to the first and, respectively, the second piezoelectric sensor element 41A1 and 41A2.

Furthermore, optionally the MEMS device 20 comprises a plurality of electric contact pads 40, which in Figure 2 are exemplarily carried by the frame portion 24' of the fixed structure 24 and electrically connected, by respective lines or vias 43, both to the piezoelectric actuators 38A1, 38A2, 38B1, 38B2, to allow the electrical bias thereof by means of actuation signals coming from the outside of the MEMS device 20, and to the first and the second piezoelectric sensor elements 41A1 and 41A2 (optionally, also to the third and the fourth piezoelectric sensor elements 41B1 and 41B2, if any), to allow the position of the mirror structure to be detected.

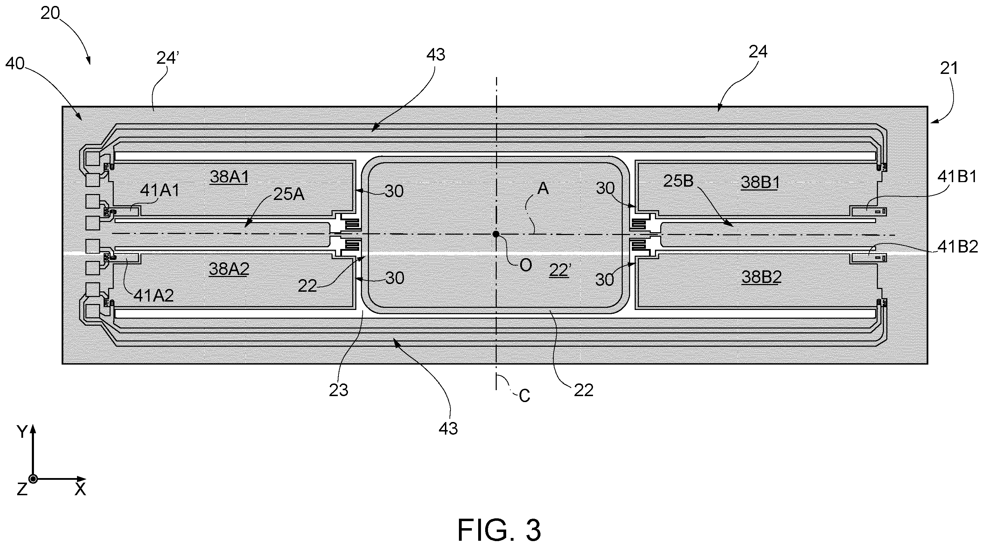

Figure 3 schematically shows the MEMS device 20, according to a further embodiment wherein the MEMS device 20 is designed to operate in a quasi-static regime (i.e. at rotation frequencies of the tiltable structure 22 lower than about 200 Hz).

In particular, the structure of the MEMS device of Figure 3 is similar to that of Figure 2, and therefore it will not be described again in detail herein.

However, in Figure 3 the deformable structures 30 extend between the frame portion 24' of the fixed structure 24 and the tiltable structure 22, on sides of the latter opposite to each other along the axis X. Therefore, the deformable structures 30 are directly coupled to the tiltable structure 22, and are not instead directly coupled to the support structure as described with reference to Figure 2.

Figure 4 schematically shows the MEMS device 20 of Figure 1, with greater details regarding the piezoelectric actuators 38 and the strain sensors 50.

For purely illustrative and non-limiting purposes, Figure 4 shows in the plane YZ two deformable structures 30 anchored to the frame portion 24' of the fixed structure 24, suspended on the cavity 23 and respectively facing sides of the tiltable structure 22 which are opposite to each other along the axis Y. In other words, the tiltable structure 22 is interposed along the axis Y between the two deformable structures 30.

Purely by way of example, one of the two deformable structures 30 (e.g., the deformable structure 30 to the left of the tiltable structure 22) has a piezoelectric actuator 38 while the other of the two deformable structures 30 (e.g., the deformable structure 30 to the right of the tiltable structure 22) has a strain sensor 50. Nevertheless, this is done only for the purpose of simplifying the visualization, the description and the mutual comparison of the piezoelectric sensor elements 41 and the piezoelectric actuators 38, therefore it is not intended in a limiting sense. In fact, in general each deformable structure 30 comprises at least one piezoelectric actuator 38 and at least one piezoelectric sensor element 41, arranged side by side to each other; however, showing both these elements for each deformable structure 30 of Figure 4 would have complicated and unnecessarily obscured the representation and understanding of the same Figure.

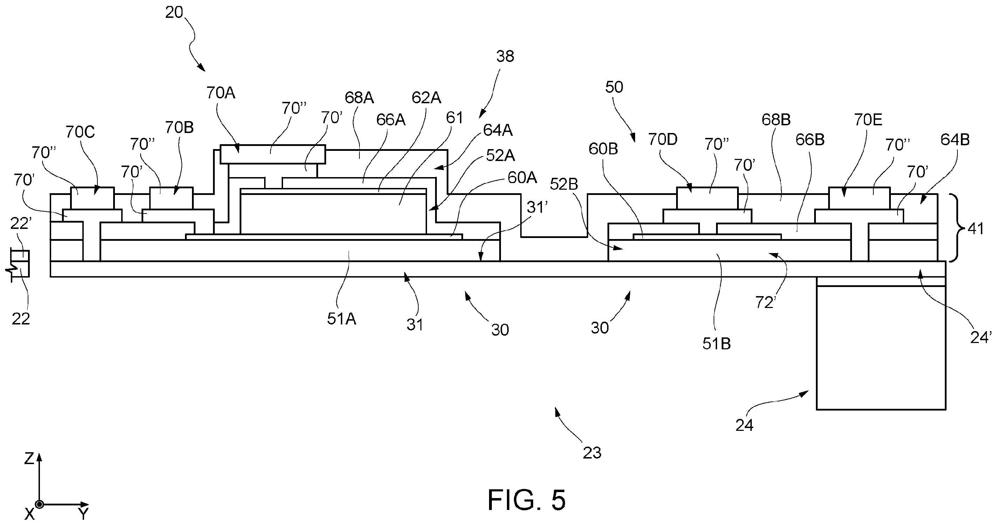

It is therefore evident that the position, the arrangement and the number of the piezoelectric sensor elements 41 and the piezoelectric actuators 38 on the deformable structures 30 may vary with respect to what is shown in Figure 4, as previously discussed for example with reference to Figures 2 and 3. For example, Figure 5 shows a similar and more realistic embodiment of the MEMS device 20 wherein a single deformable structure 30 is shown comprising a piezoelectric actuator 38 and a strain sensor 50, extending laterally to each other along the axis Y.

With reference to Figure 4, the structures of the piezoelectric sensor element 41 and the piezoelectric actuator 38 are shown in detail.

With reference to the deformable structure 30 of Figure 4 to the left of the tiltable structure 22, the piezoelectric actuator 38 extends over the top surface 31' of the deformable main body 31, which is of semiconductor material such as monosilicon or polysilicon and is in particular doped (e.g., with a doping species such as phosphorus) in such a way as to be conductive (e.g., to have electrical resistivity lower than, or equal to, about 30 mΩ·cm).

For example, in the case of Figure 4 the semiconductor body 21 comprises a double structural layer formed by a SOI (Silicon On Insulator) wafer, therefore it comprises a bottom semiconductive region 21A of semiconductor material such as silicon, an intermediate insulating region 21B of insulating material such as silicon dioxide and a top semiconductive region 21C of semiconductor material such as silicon. The bottom semiconductive region 21A and the intermediate insulating region 21B laterally delimit the cavity 23 while the top semiconductive region 21C has a portion which is suspended over the cavity 23 and which forms the deformable main body 31.

The piezoelectric actuator 38 comprises an insulating piezoelectric region 51A, of piezoelectric material and in particular of aluminum nitride (AlN) (for example of intrinsic type or doped with one or more doping species such as scandium). The insulating piezoelectric region 51A is arranged on the deformable main body 31 so as to electrically insulate it from an active actuation structure 52A of the piezoelectric actuator 38.

In the embodiment of Figure 4, the active actuation structure 52A of the piezoelectric actuator 38 extends over the insulating piezoelectric region 51A and comprises an actuation capacitor 56 formed by an actuation piezoelectric region 61, an intermediate actuation electrode 60A and a top actuation electrode 62A.

The intermediate actuation electrode 60A is of conductive material, in particular metal material such as platinum, and extends over the insulating piezoelectric region 51A, in contact with the latter.

The actuation piezoelectric region 61 extends over the intermediate actuation electrode 60A and is formed by piezoelectric material, for example PZT (lead zirconate titanate), BaTiO₃, AlN, KNN (sodium potassium niobate), PbTiO₂ or PbNb₂O₆. For example, the actuation piezoelectric region 61 has a thickness of a few micrometers, for example comprised between 1 µm and 3 µm.

The top actuation electrode 62A is of conductive material, in particular a metal material such as platinum or a titanium and tungsten alloy, and extends over the actuation piezoelectric region 61.

The piezoelectric actuator 38 also comprises a passivation region 64A, of insulating material and with a passivation function. In detail, the passivation region 64A allows the active actuation structure 52A to be electrically insulated and protected from external contaminants.

The passivation region 64A is formed here, for example, by a stack of insulating layers. By way of example, this stack of insulating layers comprises a first insulating passivation layer 66A (for example of aluminum oxide or silicon oxide, arranged on the active actuation structure 52A, the insulating piezoelectric region 51A and the deformable main body 31) and a second insulating passivation layer 68A (for example of silicon nitride, SiN, arranged on the first insulating passivation layer 66A).

The piezoelectric actuator 38 further comprises electrical connections which allow the top actuation electrode 62A, the intermediate actuation electrode 60A and the deformable main body 31 to be electrically controlled, in use.

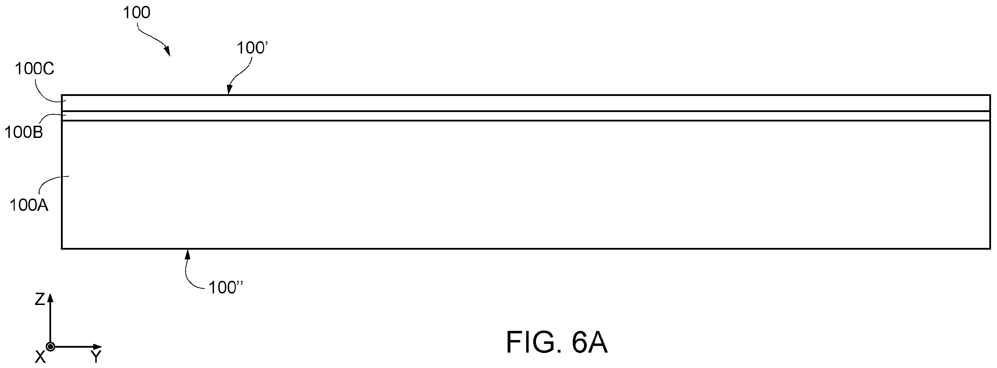

In detail, the electrical connections of the piezoelectric actuator 38 comprise a first actuation electrical connection 70A in direct physical and electrical coupling with the top actuation electrode 62A, a second actuation electrical connection 70B in direct physical and electrical coupling with the intermediate actuation electrode 60A and a third actuation electrical connection 70C in direct physical and electrical coupling with the top semiconductive region 21C and therefore with the deformable main body 31. Optionally and as also considered in Figures 6A-6R, the second actuation electrical connection 70B and the third electrical connection 70C may be joined into a single actuation electrical connection (in Figures 6A-6R, identified by the reference 70B) in such a way that the intermediate actuation electrode 60A and the top semiconductive region 21C are short-circuited with each other and therefore, in use, at the same electric potential.

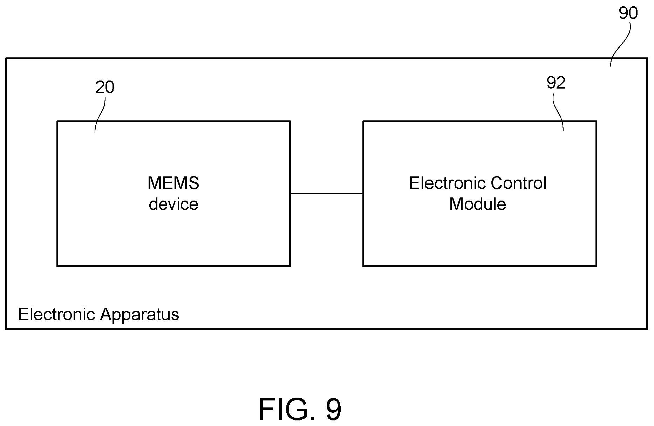

For example, each of these actuation electrical connections 70A-70C comprises a respective connection region 70' and a respective contact pad 70". The connection region 70' is formed by a conductive layer, for example of aluminum, AlCu, copper or gold, which extends over at least part of the first insulating passivation layer 66A so as to be exposed from the latter, and which forms a protrusion traversing the first insulating passivation layer 66A and in direct electrical contact with the respective element to be electrically controlled (respectively the top actuation electrode 62A, the intermediate actuation electrode 60A and the deformable main body 31). Each contact pad 70", of conductive material such as gold, extends over at least part of the second insulating passivation layer 68A so as to be exposed by the latter, forms a protrusion traversing the second insulating passivation layer 68A and is in direct electrical contact with the respective connection region 70' (therefore, by the latter it is in electrical contact with the respective element to be controlled electrically). The contact pads 70" are coupeable in use to an electronic control module (shown in Figure 9 with the reference 92), external to the MEMS device 20 and controllable as better described hereinbelow to bias the piezoelectric actuator 38 and to acquire signals coming from the strain sensor 50, by the contact pads 70" and the connection regions 70'. For example, the contact pads 70" and the connection regions 70' may form part of the pads 40 and of the electric lines or vias 43, respectively, or may be independent therefrom.

With reference instead to the deformable structure 30 of Figure 4 to the right of the tiltable structure 22, the piezoelectric sensor element 41 extends over the top surface 31' of the deformable main body 31. In detail, the piezoelectric sensor element 41 and the portion of the deformable main body 31 having the piezoelectric sensor element 41 extending thereon together form the strain sensor 50.

The strain sensor 50 comprises an active detection structure 52B of the strain sensor 50, which is formed by a detection piezoelectric region 51B, a bottom detection electrode and an intermediate detection electrode 60B.

The deformable main body 31 (in detail, the portion of the deformable main body 31 having the piezoelectric sensor element 41 extending thereon) forms the bottom detection electrode of the active detection structure 52B.

The detection piezoelectric region 51B is of the same piezoelectric material as the insulating piezoelectric region 51A (in detail AlN) and is arranged on the deformable main body 31, in contact with the latter.

The intermediate detection electrode 60B is of the same conductive material as the intermediate actuation electrode 60A and extends over the first detection piezoelectric region 51B, in contact with the latter.

Accordingly, the stack of the deformable main body 31, the first detection piezoelectric region 51B and the intermediate detection electrode 60B forms a first detection capacitor 72' of the active detection structure 52B of the strain sensor 50, which allows the position of the tiltable structure 22 to be detected by measuring the deformation of the deformable structure 30 piezoelectrically, as better described hereinbelow.

The piezoelectric sensor element 41 further comprises a respective passivation region 64B, similar to the passivation region 64A of the piezoelectric actuator 38. The passivation region 64B extends over the active detection structure 52B, over the detection piezoelectric region 51B where exposed by the top detection electrode 62B, and on the deformable main body 31 where exposed by the detection piezoelectric region 51B.

Similarly to what has been previously described, the passivation region 64B here comprises a respective first insulating passivation layer 66B (similar to the insulating passivation layer 66A and arranged on the active detection structure 52B, the detection piezoelectric region 51B and the deformable main body 31) and a respective second insulating passivation layer 68B (similar to the second insulating passivation layer 68A and arranged on the first insulating passivation layer 66B).

In addition to the detection piezoelectric region 51B, the intermediate detection electrode 60B and the passivation region 64B, the piezoelectric sensor element 41 also comprises respective electrical connections which allow in use the active detection structure 52B to be electrically controlled.

In detail, the electrical connections of the piezoelectric sensor element 41 comprise a first detection electrical connection 70D in direct physical and electrical coupling with the intermediate detection electrode 60B and a second detection electrical connection 70E in direct physical and electrical coupling with the top semiconductive region 21C and therefore with the deformable main body 31 which forms the bottom detection electrode of the active detection structure 52B. The shape and arrangement of the electrical connections of the piezoelectric sensor element 41 are entirely similar to those of the electrical connections of the piezoelectric actuator 38 and therefore are not described again in detail.

In use, each piezoelectric actuator 38 is biased, for example by the electronic control module 92, by applying respective bias electric potentials to the top actuation electrode 62A, the intermediate actuation electrode 60A and the deformable main body 31, through the respective actuation electrical connections 70A-70C.

In particular, the intermediate actuation electrode 60A and the deformable main body 31 are set at a same reference electric potential (e.g., at ground, therefore at 0 V) so that the insulating piezoelectric region 51A is not biased and does not actively contribute to the deformation of the deformable structure 30.

Furthermore, the top actuation electrode 62A and the intermediate actuation electrode 60A are biased to different electric potentials and thus a bias electric voltage is applied between the top actuation electrode 62A and the intermediate actuation electrode 60A. The application of the bias electric voltage causes, due to the inverse piezoelectric effect, a mechanical deformation of the actuation piezoelectric region 61 of the actuation capacitor 56 and accordingly a deformation of the deformable structure 30, integral therewith.

Furthermore, the deformations of the deformable structures 30 caused by the action of the piezoelectric actuators 38 generate corresponding mechanical deformations in the strain sensors 50, integral with the deformable structures 30. Therefore, due to the direct piezoelectric effect, accumulations of charges of opposite sign are generated at the interfaces between the piezoelectric material and the conductive material of the first detection capacitors of the active detection structures 52B, and then a respective detection electric voltage is generated between the intermediate detection electrode 60B and the bottom detection electrode (the deformable main body 31) of each active detection structure 52B. Accordingly, each strain sensor 50 generates a respective detection signal (i.e. the detection electric voltage) which is linked to the deformation of the deformable structure 30 and therefore to the rotation of the tiltable structure 22 around the rotation axis A. The detection electric voltage of each strain sensor 50 is acquired, for example by the electronic control module 92, through the respective detection electrical connections 70D-70E.

In other words, the top semiconductive region 21C of the semiconductor body 21 operates as a bottom electrode for both the piezoelectric actuator 38 (where however it causes no effect on the operation of the piezoelectric actuator 38, since it is set at the same electric potential as the intermediate actuation electrode 60A) and for the strain sensor 50 (where instead it is actively used).

Controlling the piezoelectric actuators 38, acquiring the detection signals generated by the strain sensors 50 and determining the position of the tiltable structure 22 starting from the acquired detection signals are performed in a per se known manner and not forming part of the present invention, therefore they are not described in detail herein. For example, patent document EP4075184 discloses details regarding a differential acquisition of the detection signals of two piezoelectric sensors; nevertheless other types of acquisition are possible, for example single-ended acquisitions.

In general, the MEMS device 20 may be used by performing an operating method which comprises the following steps: biasing the intermediate actuation electrode 60A and the deformable main body 31 to the reference electric potential; applying a bias electric voltage between the top actuation electrode 62A and the intermediate actuation electrode 60A; and acquiring the first detection electric voltage generated by the strain sensor 50 and indicative of the deformation of the deformable structure 30.

An embodiment of a manufacturing process of the MEMS device 20 is now described, with reference to Figures 6A-6R which show steps successive to each other of the manufacturing process.

For illustrative and non-limiting example, the steps shown in Figures 6A-6R refer to the structure shown in Figure 4. Nonetheless, the steps and considerations made below may similarly be applied to form the MEMS device 20 according to any of the embodiments previously discussed, as evident to the person skilled in the art.

Figure 6A shows a cross-section of a work wafer 100, in the form of a SOI (Silicon On Insulator) wafer comprising the double structural layer previously described. The SOI wafer is formed in a per se known manner, for example starting from two wafers of semiconductor material (e.g., silicon) joined to each other at respective oxide layers (e.g., SiO₂).

The work wafer 100 has a first and a second surface 100', 100" opposite to each other along the axis Z, and comprises a bottom semiconductive region 100A of semiconductor material such as silicon, an intermediate insulating region 100B of insulating material such as silicon oxide and a top semiconductive region 100C of semiconductor material such as silicon. The bottom semiconductive region 100A and the intermediate insulating region 100B are intended to form the fixed structure 24 which laterally delimits the cavity 23, while the top semiconductive region 100C is intended to form the deformable main body 31. In detail, the top semiconductive region 100C has the first surface 100' of the work wafer 100, which is therefore intended to form the top surface 31' of the deformable main body 31. In greater detail, the top semiconductive region 100C is of doped semiconductor material, such as monosilicon or doped polysilicon (e.g., with a doping species such as phosphorus), in such a way as to be conductive (e.g., to have electrical resistivity lower than, or equal to, about 30 mΩ·cm).

For example, the bottom semiconductive region 100A has a thickness along the axis Z comprised between about 400 µm and about 700 µm, the intermediate insulating region 100B has a thickness along the axis Z equal to about 1 µm and the top semiconductive region 100C has a thickness along the axis Z comprised between about 10 µm and about 100 µm.

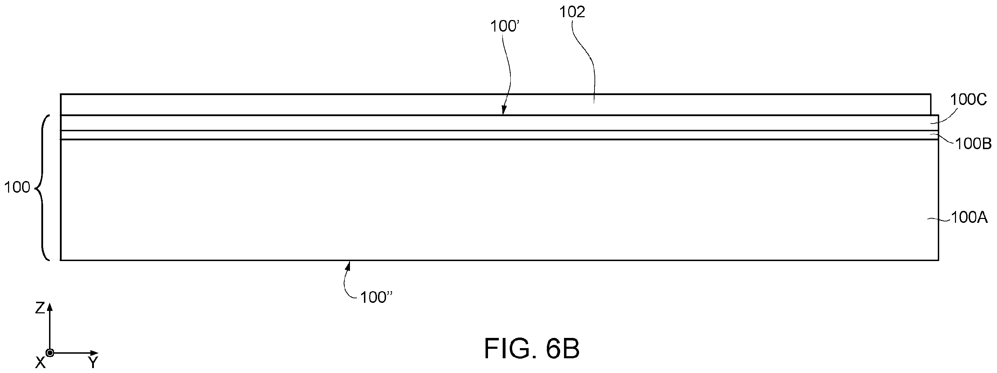

With reference to Figure 6B, a first piezoelectric layer 102, of piezoelectric material and in particular of AlN, is formed on the first surface of the work wafer 100, for example having a thickness along the axis Z equal to about 1 µm. The first piezoelectric layer 102 is intended to form the insulating piezoelectric region 51A of the piezoelectric actuator 38 and the detection piezoelectric region 51B of the strain sensor 50. Forming the first piezoelectric layer 102 occurs for example, by deposition, in particular Physical Vapor Deposition (PVD).

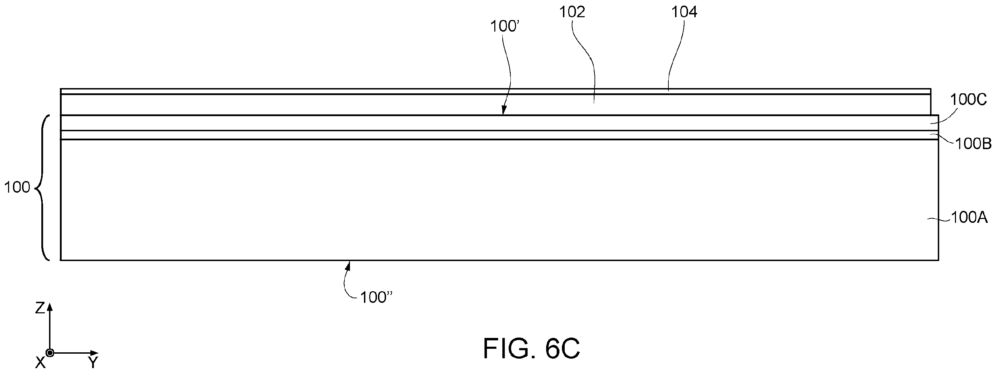

With reference to Figure 6C, a first conductive layer 104, of conductive material and in particular of metal material such as platinum, is formed (for example by deposition) on the first piezoelectric layer 102. The first conductive layer 104 has a thickness along the axis Z comprised between about 50 nm and about 200 nm. The first conductive layer 104 is intended to form the intermediate actuation electrode 60A of the piezoelectric actuator 38 and the intermediate detection electrode 60B of the strain sensor 50.

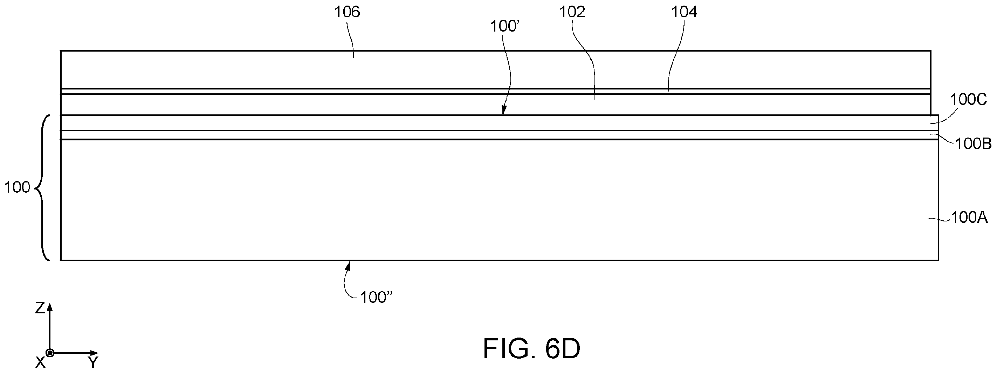

With reference to Figure 6D, a second piezoelectric layer 106, of piezoelectric material such as PZT, for example having a thickness along the axis Z comprised between about 0.5 µm and about 3 µm, is formed (for example by deposition) on the first conductive layer 104. The second piezoelectric layer 106 is intended to form the actuation piezoelectric region 61 of the piezoelectric actuator 38.

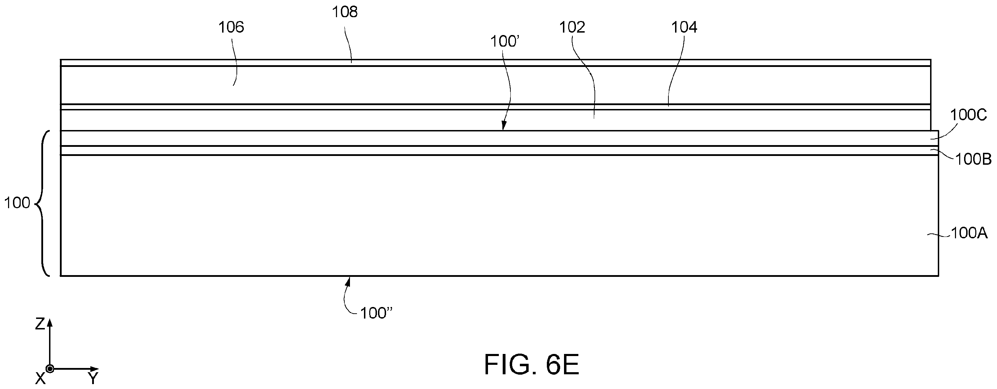

With reference to Figure 6E, a second conductive layer 108, of conductive material, in particular metal material such as platinum or titanium and tungsten alloy, is formed (for example by deposition), on the second piezoelectric layer 106. The second conductive layer 108 has a thickness along the axis Z comprised between about 50 nm and about 200 nm. The second conductive layer 108 is intended to form the top actuation electrode 62A of the piezoelectric actuator 38.

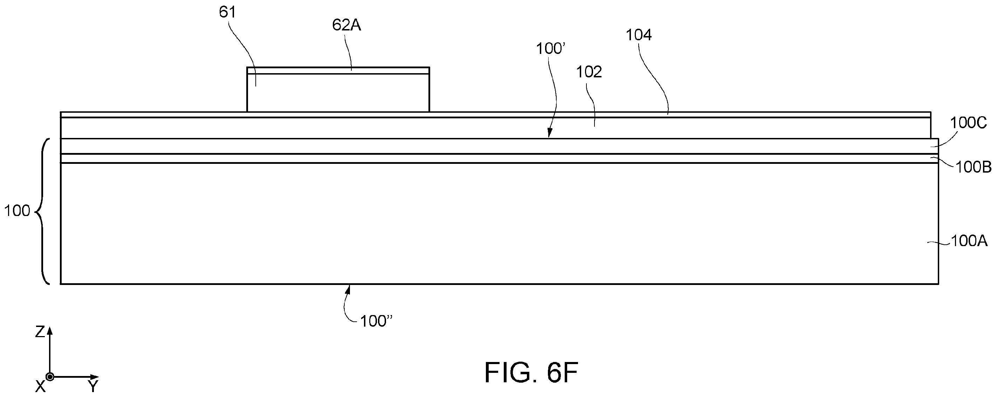

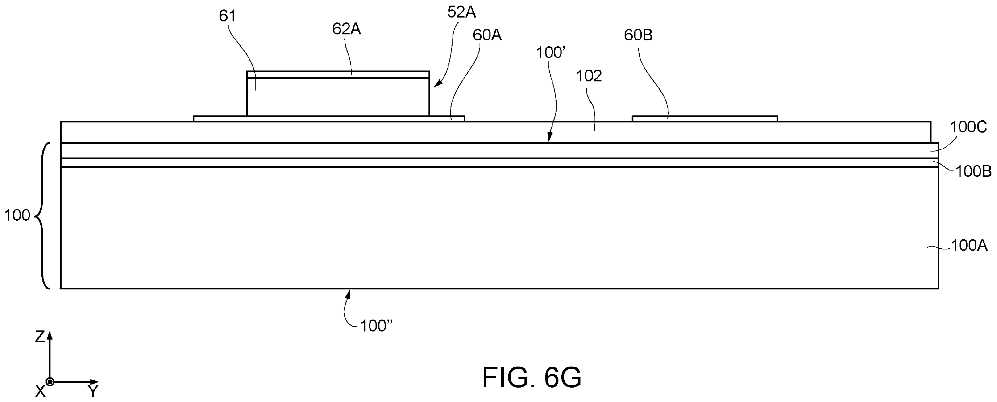

The first conductive layer 104, the second piezoelectric layer 106 and the second conductive layer 108 form a stack of layers which is patterned (Figures 6F and 6G) by means of lithographic steps and selective chemical etchings, known to the person skilled in the art, so that the first conductive layer 104 forms the intermediate actuation electrode 60A of the piezoelectric actuator 38 and the intermediate detection electrode 60B of the strain sensor 50, that the second piezoelectric layer 106 forms the actuation piezoelectric region 61 of the piezoelectric actuator 38 and that the second conductive layer 108 forms the top actuation electrode 62A of the piezoelectric actuator 38.

In particular, as visible in Figure 6F, the top actuation electrode 62A and the underlying actuation piezoelectric region 61 are patterned in a first etching step and therefore have the same shape. In detail, during the first etching step a first mask (not shown) is used which covers a region of the second conductive layer 108 adapted to become the top actuation electrode 62A and which exposes the remaining part of the second conductive layer 108. For example, the first etching step is performed either by dry etching (for example, plasma-based etching) or wet etching (for example fluorine- or chlorine-based etching), to remove the exposed regions of the second conductive layer 108 and the second piezoelectric layer 106.

Furthermore, as visible in Figure 6G, the intermediate actuation electrode 60A of the piezoelectric actuator 38 and the intermediate detection electrode 60B of the strain sensor 50 are patterned in a second etching step, successive to the first etching step. In detail, during the second etching step a second mask (not shown) is used which covers a first and a second region of the first conductive layer 104 adapted to become the intermediate actuation electrode 60A of the piezoelectric actuator 38 and the intermediate detection electrode 60B of the strain sensor 50, and which exposes the remaining part of the first conductive layer 104; for example, the first region of the first conductive layer 104 adapted to become the intermediate actuation electrode 60A of the piezoelectric actuator 38 is approximately underlying the top actuation electrode 62A and the actuation piezoelectric region 61, while the second region of the first conductive layer 104 adapted to become the intermediate detection electrode 60B of the strain sensor 50 extends laterally to the first region of the first conductive layer 104. For example, the second etching step is performed by dry etching, for example a chlorine-based etching, to remove the exposed regions of the first conductive layer 104.

The top actuation electrode 62A, the actuation piezoelectric region 61 and the intermediate actuation electrode 60A therefore form the active actuation structure 52A of the piezoelectric actuator 38.

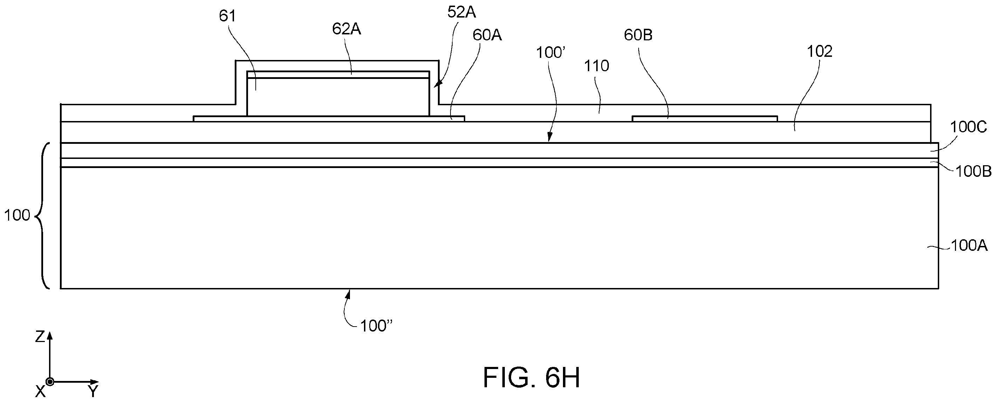

With reference to Figure 6H, a first insulating layer 110 is formed on the active actuation structure 52A of the piezoelectric actuator 38, on the intermediate detection electrode 60B of the strain sensor 50 and on the exposed regions of the first piezoelectric layer 102. The first insulating layer 110 is of insulating material such as aluminum oxide or silicon oxide and for example has a thickness along the axis Z comprised between about 100 nm and about 1 µm. The first insulating layer 110 is intended to form the first insulating passivation layers 66A of the piezoelectric actuator 38 and the strain sensor 50. Forming the first insulating layer 110 occurs for example by deposition, in particular Chemical Vapour Deposition (CVD) such as Plasma-Enhanced Chemical Vapor Deposition (PECVD) and/or Atomic Layer Deposition (ALD).

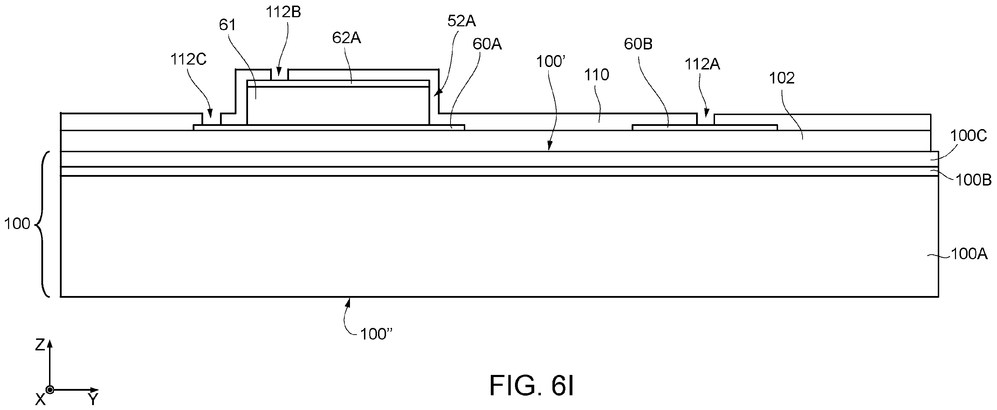

With reference to Figure 6I, first electrical connection openings (or trenches) 112A, 112B and 112C are formed through the first insulating layer 110 in such a way as to partially expose the intermediate detection electrode 60B of the strain sensor 50, the top actuation electrode 62A of the piezoelectric actuator 38 and the intermediate actuation electrode 60A of the piezoelectric actuator 38. The first electrical connection openings 112A, 112B and 112C are lateral to each other and are intended to accommodate, at least partially, the connection regions 70' of the electrical connections 70A, 70B and 70D in such a way that they may be in direct electrical contact respectively with the top actuation electrode 62A of the piezoelectric actuator 38, the intermediate actuation electrode 60A of the piezoelectric actuator 38 and the intermediate detection electrode 60B of the strain sensor 50.

The first electrical connection openings 112A, 112B and 112C are formed by lithographic steps and selective chemical etching, known to the person skilled in the art. In particular, a third etching step is performed wherein a third mask (not shown) is used which exposes the regions of the first insulating layer 110 to be removed to form the first electrical connection openings 112A, 112B and 112C where the connection regions 70' will be formed, and which covers the remaining parts of the first insulating layer 110. For example, the third etching step is performed either by dry etching (for example, plasma-based etching) or wet etching (for example, fluorine-based etching).

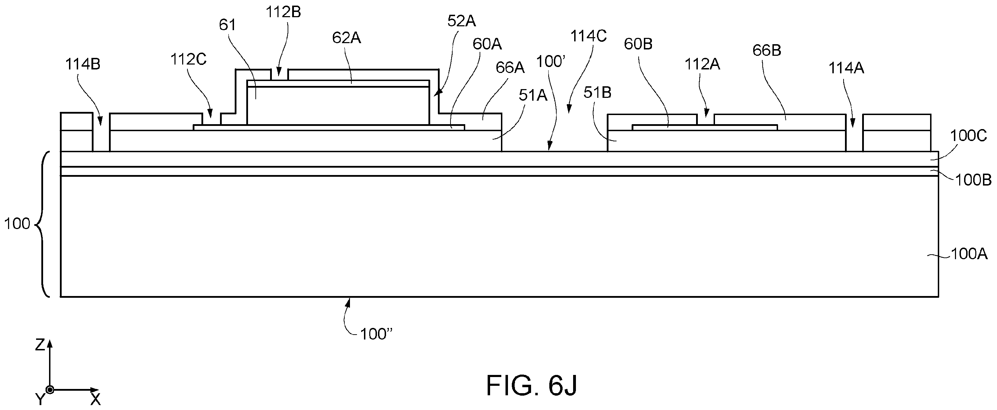

With reference to Figure 6J, second electrical connection openings (or trenches) 114A, 114B and a first work opening (or trench) 114C are formed which extend through the first insulating layer 110 and the first piezoelectric layer 102 in such a way as to expose regions of the first surface 100' of the work wafer 100. The second electrical connection openings 114A, 114B and the first work opening 114C are lateral to each other and with respect to the first electrical connection openings 112A, 112B and 112C. The second electrical connection openings 114A, 114B are intended to accommodate, at least partially, the connection regions 70' of the electrical connections 70C and 70E in such a way that they may be in direct electrical contact with the top semiconductive region 100C of the work wafer 100. Instead, the first work opening 114C is intended to expose the portion of the top semiconductive region 100C of the work wafer 100 which will form the tiltable structure 22.

The second electrical connection openings 114A, 114B and the first work opening 114C are formed by lithographic steps and selective chemical etching, known to the person skilled in the art. In particular, a fourth etching step is performed wherein a fourth mask (not shown) is used which exposes the regions of the first insulating layer 110 and the underlying regions of the first piezoelectric layer 102 to be removed to form both the second electrical connection openings 114A, 114B (where the connection regions 70' will be formed) and the first work opening 114C (where the tiltable structure 22 will be formed), and which covers the remaining parts of the first insulating layer 110 and the first piezoelectric layer 102. For example, the fourth etching step is performed either by dry etching (for example, plasma-based etching) or wet etching (for example, fluorine-based etching).

The portions of the first insulating layer 110 remaining following the etchings of Figures 6I and 6J define the first insulating passivation layers 66A, 66B of the piezoelectric actuator 38 and the strain sensor 50.

Furthermore, the portions of the first piezoelectric layer 102 remaining following the etchings of Figures 6I and 6J define the insulating piezoelectric region 51A of the piezoelectric actuator 38 and the detection piezoelectric region 51B of the active detection structure 52B of the strain sensor 50, lateral and spaced from each other.

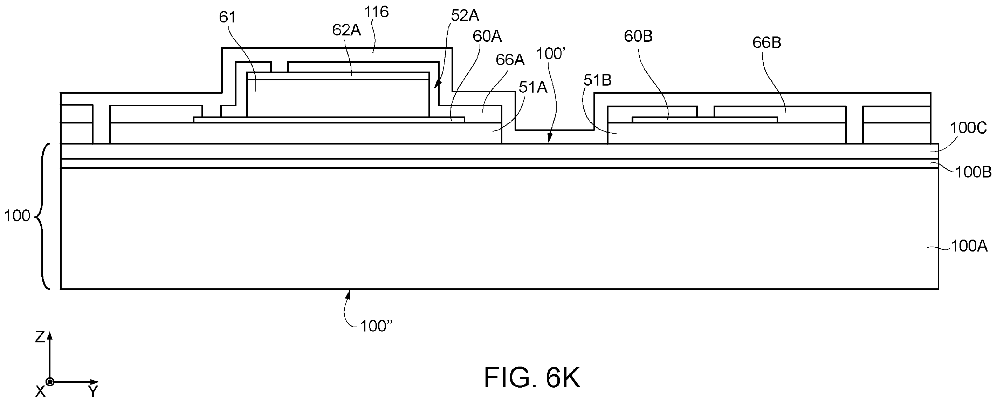

With reference to Figure 6K, a third conductive layer 116 is formed on the first insulating passivation layers 66A, 66B of the piezoelectric actuator 38 and the strain sensor 50 and on the exposed regions of the intermediate detection electrode 60B of the strain sensor 50, the top actuation electrode 62A of the piezoelectric actuator 38, the intermediate actuation electrode 60A of the piezoelectric actuator 38 and the top semiconductive region 100C of the work wafer 100. The third conductive layer 116 is of conductive material such as aluminum, AlCu, copper or gold and, for example, has a thickness along the axis Z equal to about 0.5 µm. The third conductive layer 116 is intended to form the connection regions 70' of the electrical connections 70A-70E. Forming the third conductive layer 116 occurs for example by deposition.

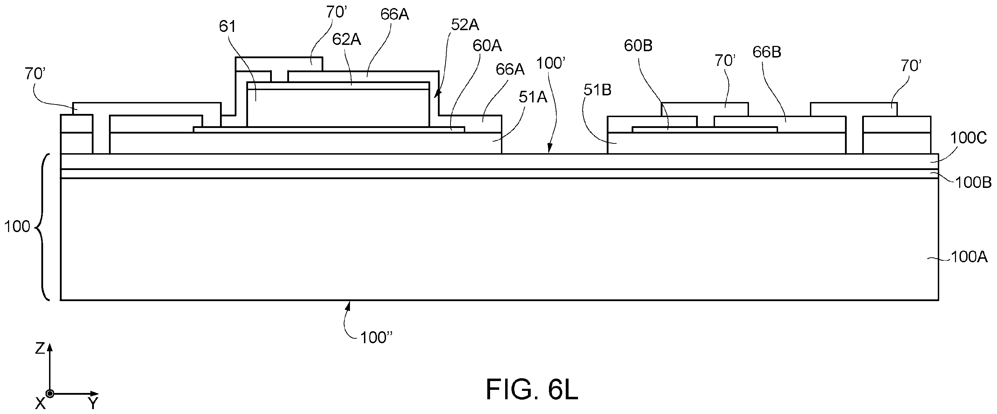

With reference to Figure 6L, the third conductive layer 116 is patterned by means of lithographic steps and selective chemical etchings, known to the person skilled in the art, in such a way as to form the connection regions 70' of the electrical connections 70A-70E, physically spaced from each other.

In particular, this is done by a fifth etching step and using a fifth mask (not shown) which covers the regions of the third conductive layer 116 adapted to become the connection regions 70' of the electrical connections 70A-70E and which exposes the remaining part of the third conductive layer 116. For example, the fifth etching step is performed either by dry etching (for example, plasma-based etching with chlorinated gases) or wet etching (for example, etching based on mixtures of nitric acid and phosphoric acid), to remove the exposed regions of the third conductive layer 116.

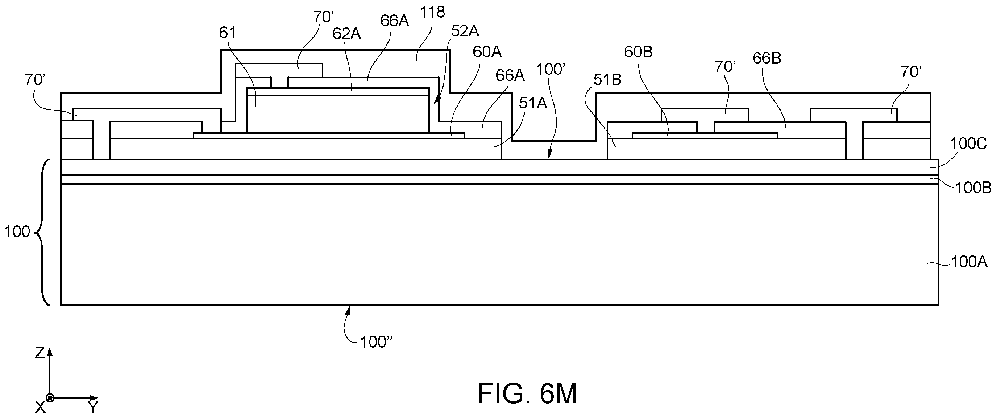

With reference to Figure 6M, a second insulating layer 118 is formed on the connection regions 70' of the electrical connections 70A-70E, on the first insulating passivation layers 66A, 66B of the piezoelectric actuator 38 and the strain sensor 50 and on the exposed region of the top semiconductive region 100C of the work wafer 100 which will form the tiltable structure 22. The second insulating layer 118 is of insulating and passivating material such as SiN and for example has a thickness along the axis Z comprised between about 100 nm and about 1 µm. The second insulating layer 118 is intended to form the second insulating passivation layers 68A, 68B of the piezoelectric actuator 38 and the strain sensor 50. Forming the second insulating layer 118 occurs for example by deposition (for example CVD).

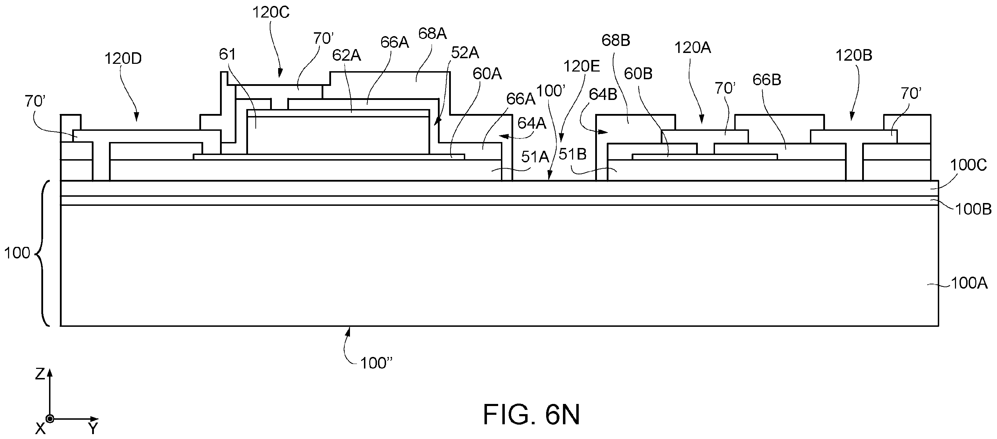

With reference to Figure 6N, the second insulating layer 118 is patterned by means of lithographic steps and selective chemical etchings, known to the person skilled in the art, in such a way as to form the second insulating passivation layers 68A, 68B of the piezoelectric actuator 38 and the strain sensor 50.

This occurs by forming third electrical connection openings (or trenches) 120A-120D and a second work opening (or trench) 120E in the second insulating layer 118. The third electrical connection openings 120A-120D extend through the second insulating layer 118 in such a way as to at least partially expose the connection regions 70' of the electrical connections 70A-70E, and are intended to accommodate, at least partially, the contact pads 70" of the electrical connections 70A-70E in such a way that they may be in direct electrical contact with the respective connection regions 70' of the electrical connections 70A-70E. The second work opening 120E extends through the second insulating layer 118 in such a way as to expose the portion of the top semiconductive region 100C of the work wafer 100 that will form the tiltable structure 22, therefore is substantially aligned with the first work opening 114C.

The third electrical connection openings 120A-120D and the second work opening 120E are formed by lithographic steps and selective chemical etching, known to the person skilled in the art. In particular, a seventh etching step is performed wherein a seventh mask (not shown) is used which exposes the regions of the second insulating layer 118 to be removed to form both the third electrical connection openings 120A-120D (where the contact pads 70" will be formed) and the second work opening 120E (where the tiltable structure 22 will be formed), and which covers the remaining parts of the second insulating layer 118. For example, the sixth etching step is performed by dry etching, in particular a plasma-based etching (e.g., a fluorine-based etching).

In this manner, the passivation regions 64A and 64B of the piezoelectric actuator 38 and the strain sensor 50 are also formed, as a union of the first insulating passivation layers 66A, 66B and the second insulating passivation layers 68A, 68B.

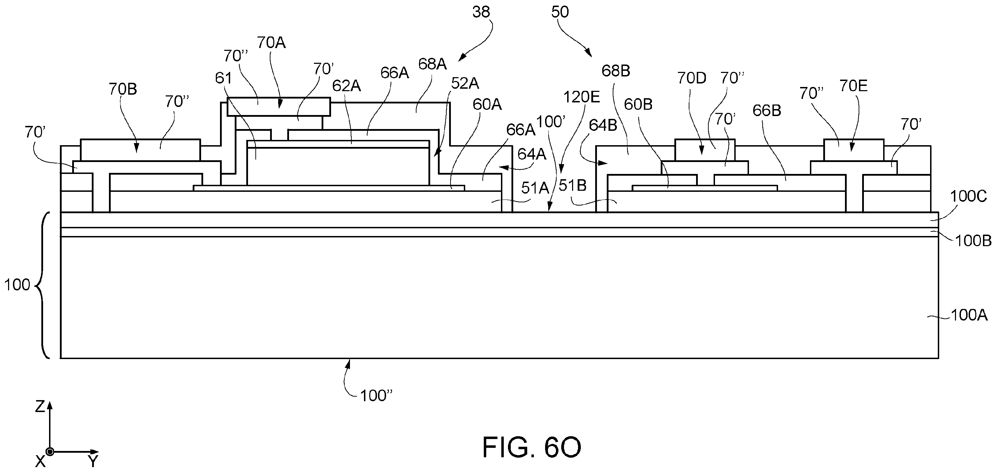

With reference to Figure 6O, the contact pads 70" of the electrical connections 70A-70E are formed in the third electrical connection openings 120A-120D and therefore in direct electrical contact with the connection regions 70' of the electrical connections 70A-70E. This occurs similarly to forming the connection regions 70' of the electrical connections 70A-70E and is therefore not described in detail again. Briefly, there is formed a fourth conductive layer (not shown and of a conductive material such as gold, for example with a thickness along the axis Z comprised between about 100 nm and about 500 nm), which is then patterned by means of lithographic steps and selective chemical etchings (known to the person skilled in the art, in particular by an eighth etching step and using an eighth mask) in such a way as to form the contact pads 70" of the electrical connections 70A-70E, physically spaced from each other.

In this manner the electrical connections 70A-70E are formed.

Accordingly, both the strain sensor 50 and the piezoelectric actuator 38 are also formed.

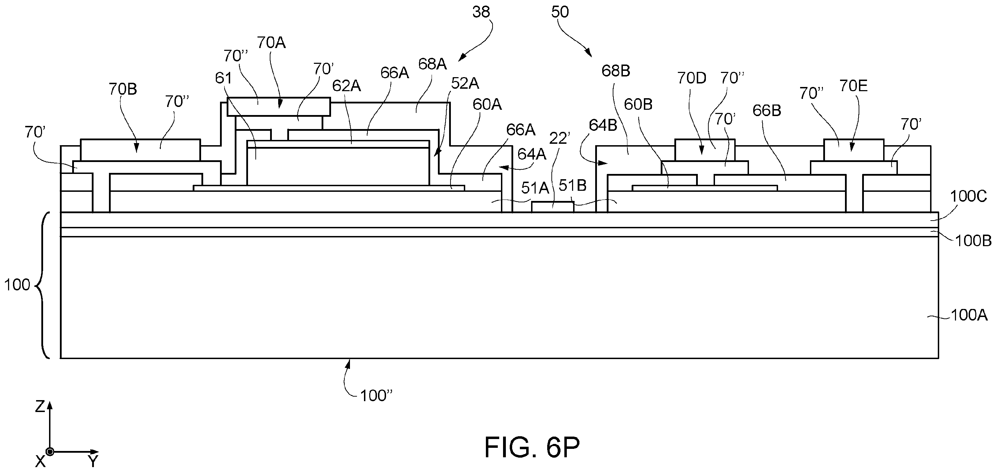

With reference to Figure 6P, the reflective surface 22' of the mirror structure is formed on the exposed part of the top semiconductive region 100C of the work wafer 100 which will become the tiltable structure 22. This occurs similarly to forming the connection regions 70' of the electrical connections 70A-70E and therefore it is not described again in detail. Briefly, there is formed a fifth conductive layer (not shown and of material reflecting the radiation such as aluminum or gold depending on whether the projection is in the visible or in the infrared), for example with a thickness along the axis Z equal to about 100 nm, which is then patterned by means of lithographic steps and selective chemical etchings (known to the person skilled in the art, in particular by a ninth etching step and using a ninth mask which covers the region of the fifth conductive layer intended to form the reflective surface 22' and which exposes the remaining part of the fifth conductive layer) in such a way as to form the reflective surface 22'.

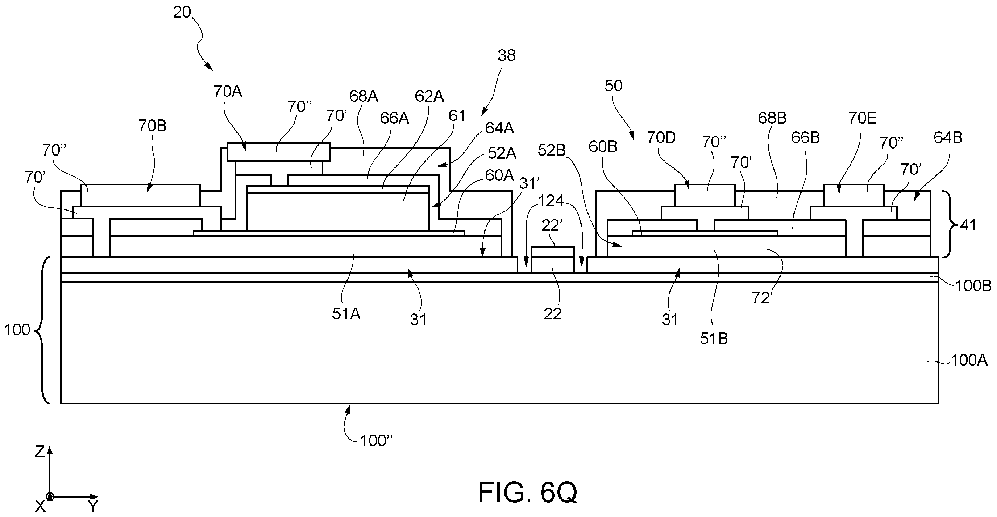

With reference to Figure 6Q, a planar profile opening (or trench) 124 is formed through the top semiconductive region 100C of the work wafer 100 and down to reaching the intermediate insulating region 100B of the work wafer 100. The planar profile opening 124 physically separates the portions of the top semiconductive region 100C which are intended to form the tiltable structure 22 and the one or more deformable main bodies 31. In other words, in top view and therefore in the plane XY, the planar profile opening 124 partially surrounds the deformable main body 31 (i.e., it surrounds the deformable main body 31 except for the portion through which it is intended to be fixed to the fixed structure 24) and completely surrounds the reflective surface 22'. In this manner, the portions of the top semiconductive region 100C underlying the piezoelectric actuator 38 and the piezoelectric sensor element 41 (which will form the deformable main bodies 31) and the portion of the top semiconductive region 100C underlying the reflective surface 22' (which will form the tiltable structure 22) are physically insulated (i.e. spaced) from each other and with respect to the remaining part of the top semiconductive region 100C which will form the fixed structure 24. In other words, the planar profile opening 124 defines the planar profile, in top view, of the movable parts of the MEMS device 20 which are suspended on the cavity 23.

The planar profile opening 124 is formed by lithographic steps and selective chemical etching, known to the person skilled in the art. In particular, a tenth etching step is performed wherein a tenth mask (not shown) is used which exposes the exposed parts of the top semiconductive region 100C, to be removed to form the planar profile opening 124, and which covers the remaining parts of the piezoelectric actuator 38, the strain sensor 50 and the reflective surface 22'. For example, the tenth etching step is performed by dry etching, in particular a plasma-based etching, in greater detail a "Deep Reactive Ion Etching", DRIE.

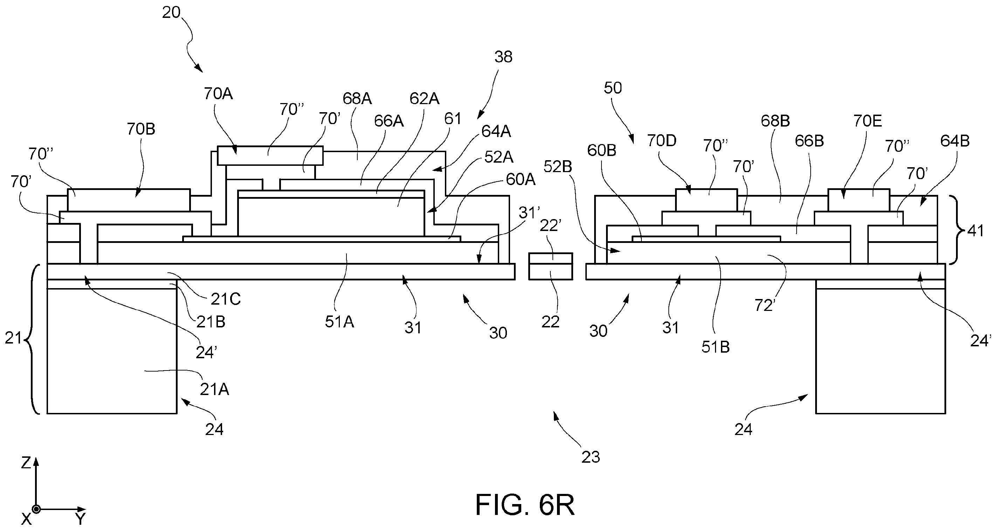

With reference to Figure 6R, the cavity 23 is formed to define the mirror structure and the deformable structures 30 of suspended type, and therefore to obtain the MEMS device 20. In fact, after forming the cavity 23, the mirror structure and the deformable structures 30 are suspended on the cavity 23 and the remaining part of the work wafer 100 defines the anchoring structure.

In particular, the cavity 23 is formed by lithographic steps and selective chemical etching, known to the person skilled in the art, starting from the second surface 100" of the work wafer 100 and up to reaching the top semiconductive region 100C. In detail, this is done by an eleventh etching step wherein an eleventh mask (not shown) is used which exposes the parts of the bottom semiconductive region 100A and the superimposed intermediate insulating region 100B aligned along the axis Z with the piezoelectric actuator 38, the strain sensor 50 and the mirror structure, and which covers the remaining parts of the bottom semiconductive region 100A and the superimposed intermediate insulating region 100B adapted to form the fixed structure 24. For example, the eleventh etching step is performed by a selective chemical etching such as a dry chemical etching, for example by dry etching, in particular a plasma-based etching, in greater detail DRIE.

In general, the steps of Figures 6D-6F refer only to the manufacture of the piezoelectric actuator 38 and not also to the strain sensor 50.

Furthermore, the steps of Figures 6P-6Q (as well as forming the first work opening 114C in Figure 6J and the second work opening 120E in Figure 6N) refer only to the manufacture of the mirror structure.

Furthermore, the steps of Figures 6H-6O refer generically to forming the passivation regions 64A, 64B and the electrical connections 70A-70E of the piezoelectric actuator 38 and the strain sensor 50.

As shown in Figure 9, the MEMS device 20 manufactured according to the previously described manufacturing process may be comprised in an electronic apparatus 90, which also comprises the electronic control module 92. The electronic control module 92 is operatively coupled to the MEMS device 20 and is configured to acquire the first detection electric voltage, generated by the strain sensor 50 and indicative of the deformation of the deformable structure 30, and electrically control the piezoelectric actuator 38 based on the first detection electric voltage (e.g., in closed- loop), in a per se known manner.

From an examination of the characteristics of the invention made according to the present invention the advantages that it affords are evident.

In particular, the MEMS device 20 allows both to actuate a deformation structure piezoelectrically and to monitor its deformation, again piezoelectrically. This allows the position of the tiltable structure 22 to be controlled more accurately.

The strain sensor 50 is based on AlN and therefore has electrical measurement performances higher than the corresponding known cases based on other piezoelectric materials such as PZT.

Furthermore, the use of the deformable main body 31 as a bottom detection electrode of the active detection structure 52B allows to actively use (i.e. for detection purposes) an insulating material layer which would in any case be present for known reasons of manufacture and use of the piezoelectric sensors. This allows the strain sensor 50 to be formed using a smaller number of manufacturing steps with respect to some known solutions. Furthermore, without the need to increase the number of manufacturing steps with respect to other known solutions, this allows to have the active piezoelectric layers of the piezoelectric actuator 38 and the strain sensor 50 which are of different materials (e.g., PZT for the piezoelectric actuator 38 and AlN for the strain sensor 50) and therefore allows to achieve the simultaneous optimization of both the actuation performances and the detection performances of the MEMS device 20.

These advantages are particularly useful in case the MEMS device 20 is a mirror device, since they allow a mirror device with optimized electrical and use performances to be manufactured at a low cost.

Finally, it is clear that modifications and variations may be made to the invention described and illustrated herein without thereby departing from the scope of the claims.

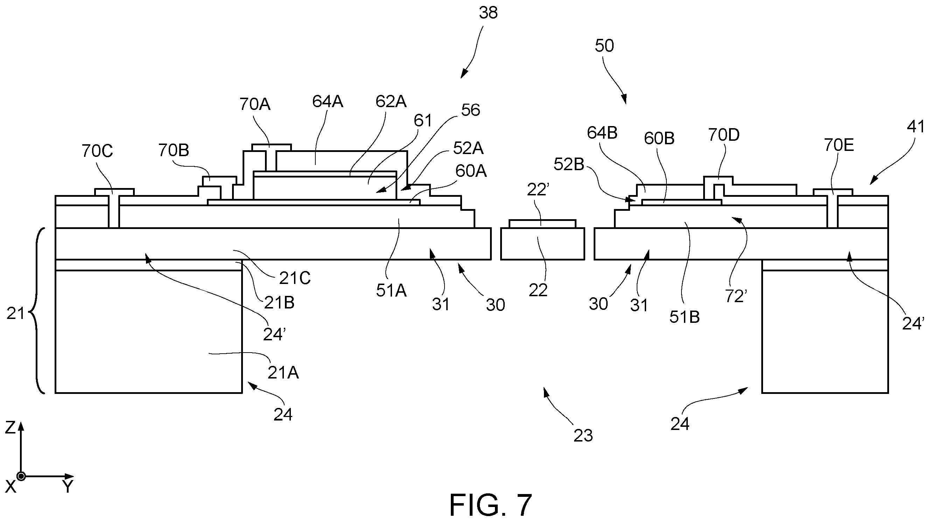

Furthermore, Figure 7 shows a different embodiment of the MEMS device 20.

The structure of the MEMS device 20 of Figure 7 is similar to that of the MEMS device 20 of Figure 4.

However, in Figure 7 the passivation regions 64A, 64B of the piezoelectric actuator 38 and the strain sensor 50 are monolithic and made entirely of a single material (i.e. they do not comprise a stack of insulating passivation layers), as well as the electrical connections 70A-70E (which for example are entirely of gold). This further simplifies the manufacturing process of the MEMS device 20. Furthermore, the use of gold to form the electrical connections 70A-70E reduces the risk of corrosion of the same in the presence of humidity.

Optionally, in Figure 7 the passivation regions 64A, 64B of the piezoelectric actuator 38 and the strain sensor 50 are also of AlN, like the insulating piezoelectric region 51A and the detection piezoelectric region 51B. This improves the mechanical strength of the MEMS device 20 and above all simplifies the manufacturing process of the same and reduces the costs thereof, since fewer materials and fewer steps are required for the manufacturing of the MEMS device 20 (e.g., the third conductive layer 116 may be of material such as gold and the manufacturing steps of Figures 6M-6O may be omitted).

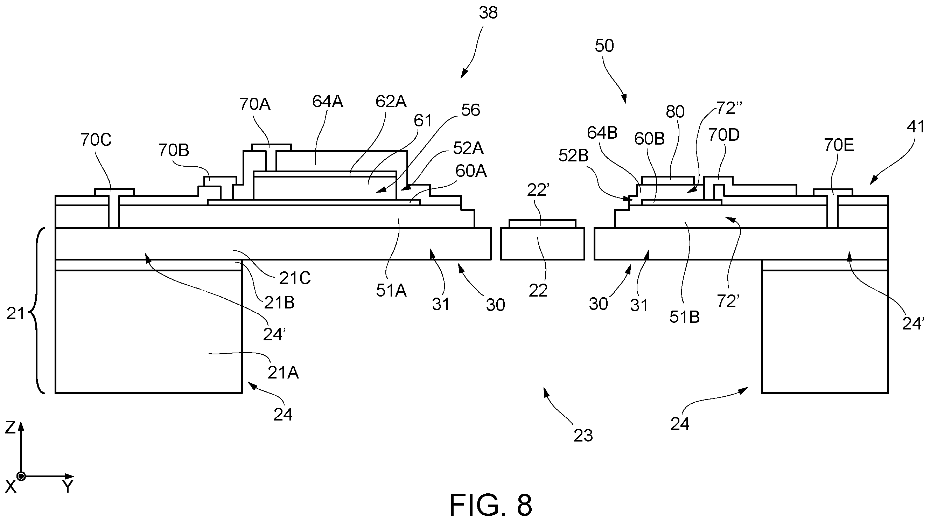

Furthermore, Figure 8 shows a further embodiment of the MEMS device 20.

The structure of the MEMS device 20 of Figure 8 is similar to that of the MEMS device 20 of Figure 7, with the passivation regions 64A, 64B of the piezoelectric actuator 38 and the strain sensor 50 which are monolithic and formed of AlN.

Furthermore, the strain sensor 50 of the MEMS device 20 of Figure 8 also comprises a top detection electrode 80 which extends over the passivation region 64B of the strain sensor 50, physically spaced from the detection electrical connections 70D-70E and therefore not in direct electrical contact therewith. In detail, the top detection electrode 80, the intermediate detection electrode 60B and the bottom detection electrode (i.e. the top semiconductive region 21C and therefore with the deformable main body 31) of the active detection structure 52B are superimposed on each other along the axis Z.

The top detection electrode 80 defines, together with the passivation region 64B of AlN and the intermediate detection electrode 60B, a second detection capacitor 72" of the active detection structure 52B of the strain sensor 50. In practice, in Figure 8 the active detection structure 52B of the strain sensor 50 comprises both the first and the second detection capacitors 72', 72" which share the intermediate detection electrode 60B and which are therefore electrically connected in series with each other.

In particular, the top detection electrode 80 is similar to the intermediate detection electrode 60B and is of conductive material, in particular metal material such as platinum or gold, and extends over the passivation region 64B of AlN 64B, in contact with the latter.

The presence of the first and the second detection capacitors 72', 72" in series with each other allows the sensitivity of the measurement of the position of the tiltable structure 22 to be increased without complicating the manufacturing process of the MEMS device 20.

In fact, the top detection electrode 80 may, for example, be formed with the same material as the electrical connections 70A-70E, during the manufacturing of the latter (e.g., manufacturing step of Figure 6L). Accordingly, no additional masks or manufacturing steps are required since it is sufficient for the fifth mask to also cover the region of the third conductive layer 116 adapted to become the top detection electrode 80.

In general, the MEMS device 20 is not to be understood as limited to the case of a MEMS mirror device, but may be a generic MEMS device comprising at least one deformable structure 30 actuated piezoelectrically, whose position is desired to be accurately and piezoelectrically detected. This deformable structure 30 comprises the respective deformable main body 31 suspended on the cavity and, on the deformable main body 31, at least one piezoelectric sensor element 41 and at least one piezoelectric actuator 38 arranged side by side to each other, similarly to what has been previously described. For example, the MEMS device may also be a speaker device, an optical lens device, or a Piezoelectric Micromachined Ultrasonic Transducer (PMUT) device.

Furthermore, although the case in which the semiconductor body 21 is a double structural layer formed by a processed SOI wafer has been previously considered, the semiconductor body 21 may also be a die of semiconductor material, in particular mono- or polycrystalline silicon. In general, the semiconductor body 21 comprises the bottom semiconductive region 21A, of semiconductor material such as silicon and which defines the fixed structure 24 and delimits the cavity 23, and the top semiconductive region 21C, of semiconductor material such as silicon, superimposed on the bottom semiconductive region 21A and which defines the deformable main body 31 suspended on the cavity 23. Furthermore, the semiconductor body 21 is formed starting from the work wafer 100 which generally comprises the bottom semiconductive region 100A, of semiconductor material such as silicon and intended to form the fixed structure 24 and to delimit the cavity 23, and the top semiconductive region 100C, of semiconductor material such as silicon, superimposed on the bottom semiconductive region 100A and intended to form the deformable main body 31 suspended on the cavity 23.

## Claims

1. A MEMS device (20) comprising:
- a semiconductor body (21) including a fixed structure (24) and a deformable main body (31), the fixed structure (24) defining a cavity (23) in the semiconductor body (21) and the deformable main body (31) being fixed to the fixed structure (24) and suspended on the cavity (23);
- a piezoelectric actuator (38) extending over the deformable main body (31); and
- a piezoelectric sensor element (41) which extends over the deformable main body (31), laterally to the piezoelectric actuator (38), and which forms with the deformable main body (31) a strain sensor (50),
wherein the piezoelectric sensor element (41) comprises:
- a detection piezoelectric region (51B) of aluminum nitride, extending over the deformable main body (31); and
- an intermediate detection electrode (60B) extending over the detection piezoelectric region (51B),
wherein the deformable main body (31), the detection piezoelectric region (51B) and the intermediate detection electrode (60B) form a first detection capacitor (70') of an active detection structure (52B) of the strain sensor (50), the deformable main body (31) being configured to operate as bottom detection electrode of the first detection capacitor (70'),
wherein the deformable main body (31), the piezoelectric actuator (38) and the piezoelectric sensor element (41) form a deformable structure (30) suspended on the cavity (23),
wherein the piezoelectric actuator (38) is electrically controllable to generate a deformation of the deformable structure (30), and
wherein the active detection structure (52B) of the strain sensor (50) is configured to generate, in response to the deformation of the deformable structure (30), a first detection electric voltage between the bottom detection electrode and the intermediate detection electrode (60B) of the first detection capacitor (70'), which is indicative of the deformation of the deformable structure (30).

2. The MEMS device (20) according to claim 1, wherein the piezoelectric sensor element (41) further comprises:
- a passivation region (64B) of insulating material, extending over the intermediate detection electrode (60B);
- a first detection electrical connection (70D) of conductive material, extending through the passivation region (64B) of the piezoelectric sensor element (41) and in electrical contact with the intermediate detection electrode (60B); and
- a second detection electrical connection (70E) of conductive material, extending through the passivation region (64B) of the piezoelectric sensor element (41), in electrical contact with the deformable main body (31) and electrically insulated from the first detection electrical connection (70D).

3. The MEMS device (20) according to claim 2, wherein the passivation region (64B) is monolithic and is of aluminum nitride.

4. The MEMS device (20) according to claim 3, wherein the piezoelectric sensor element (41) further comprises a top detection electrode (80) extending over the passivation region (64B),
wherein the top detection electrode (80), the passivation region (64B) and the intermediate detection electrode (60B) form a second detection capacitor (70") of the active detection structure (52B) of the strain sensor (50), the first detection capacitor (70') and the second detection capacitor (70") being electrically in series with each other,
wherein the active detection structure (52B) of the strain sensor (50) is further configured to generate, in response to the deformation of the deformable structure (30), a second detection electric voltage between the intermediate detection electrode (60B) and the top detection electrode (80) of the second detection capacitor (70"), which is indicative of the deformation of the deformable structure (30) .

5. The MEMS device (20) according to any of the preceding claims, wherein the deformable main body (31) is of doped semiconductor material and has an electrical resistivity lower than, or equal to, 30 mΩ·cm.

6. The MEMS device (20) according to any of the preceding claims, wherein the piezoelectric actuator (38) includes:
- an insulating piezoelectric region (51A) of aluminum nitride, extending over the deformable main body (31) laterally to the detection piezoelectric region (51B);
- an intermediate actuation electrode (60A) of conductive material, extending over the insulating piezoelectric region (51A);
- an actuation piezoelectric region (61) of piezoelectric material, extending over the intermediate actuation electrode (60A); and
- a top actuation electrode (62A) of conductive material, extending over the actuation piezoelectric region (61),
wherein the intermediate actuation electrode (60A), the actuation piezoelectric region (61) and the top actuation electrode (62A) form an actuation capacitor (56) of an active actuation structure (52A) of the piezoelectric actuator (38) .

7. The MEMS device (20) according to claim 6, wherein the piezoelectric actuator (38) further comprises:
- a respective passivation region (64A) of insulating material, extending over the top actuation electrode (62A);
- a first actuation electrical connection (70A) of conductive material, extending through the passivation region (64A) of the piezoelectric actuator (38) and in electrical contact with the top actuation electrode (62A); and
- a second actuation electrical connection (70B) of conductive material, extending through the passivation region (64A) of the piezoelectric actuator (38) and electrically insulated from the first actuation electrical connection (70A), and
wherein the second actuation electrical connection (70B) is in electrical contact with the deformable main body (31) and with the intermediate actuation electrode (60A), or
wherein the second actuation electrical connection (70B) is in electrical contact with the intermediate actuation electrode (60A) and the piezoelectric actuator (38) further comprises a third actuation electrical connection (70C) of conductive material, which extends through the passivation region (64A) of the piezoelectric actuator (38), is electrically insulated from the first actuation electrical connection (70A) and the second actuation electrical connection (70B) and is in electrical contact with the deformable main body (31).

8. The MEMS device (20) according to any of the preceding claims, wherein the MEMS device (20) is of mirror type and further comprises:
- a tiltable structure (22) elastically suspended on the cavity (23);
- a first and a second support arm (25A, 25B) extending between the fixed structure (24) and opposite sides of the tiltable structure (22), along a rotation axis (A) of the tiltable structure (22);
- a plurality of said deformable structures (30) which face opposite sides of the first support arm (25A), extend between the fixed structure (24) and said opposite sides of the first support arm (25A) or between the fixed structure (24) and the tiltable structure (22), and are electrically controllable to deform mechanically thereby generating a rotation of the tiltable structure (22) around the rotation axis (A),
wherein the strain sensors (50) of the deformable structures (30) are opposite to each other with respect to the rotation axis (A), and
wherein, when the tiltable structure (22) rotates around the rotation axis (A) due to the deformable structures (30), the strain sensors (50) of the deformable structures (30) undergo respective mechanical deformations and generate respective detection signals which are indicative of the rotation of the tiltable structure (22) around the rotation axis (A) and are in phase-opposition to each other.

9. A manufacturing process of a MEMS device (20) according to any of claims 1-8, comprising the steps of:
a. forming a first piezoelectric layer (102) of aluminum nitride on a first surface (100') of a work wafer (100) comprising a bottom semiconductive region (100A) of semiconductor material and a top semiconductive region (100C) of semiconductor material, superimposed along a first axis (Z) on the bottom semiconductive region (100A) of the work wafer (100) and defining said first surface (100') of the work wafer (100), the work wafer (100) also having a second surface (100") opposite to the first surface (100') along the first axis (Z);
b. forming, on the first piezoelectric layer (102), a first conductive layer (104) of conductive material;
f. patterning, by chemical etching, the first conductive layer (104) in such a way as to form the intermediate detection electrode (60B) of the strain sensor (50);
i. forming, by chemical etching, a first work trench (114C) through the first piezoelectric layer (102) and up to exposing the top semiconductive region (100C) of the work wafer (100), the first work trench (114C) surrounding, orthogonally to the first axis (Z), a portion of the first piezoelectric layer (102) which underlies the intermediate detection electrode (60B) along the first axis (Z) and which forms the detection piezoelectric region (51B);
p. forming, by chemical etching, a planar profile trench (124) through the top semiconductive region (100C) of the work wafer (100), the planar profile trench (124) partially surrounding, orthogonally to the first axis (Z), a portion of the top semiconductive region (100C) of the work wafer (100), underlying the detection piezoelectric region (51B) and adapted to form the deformable main body (31), and physically separating, orthogonally to the first axis (Z), part of said portion of the top semiconductive region (100C) from the remaining part of the top semiconductive region (100C) of the work wafer (100) in such a way as to define, orthogonally to the first axis (Z), a planar profile of the deformable main body (31); and
q. removing, by chemical etching performed starting from the second surface (100") of the work wafer (100), a portion of the bottom semiconductive region (100A) of the work wafer (100) underlying the deformable main body (31), up to exposing the top semiconductive region (100C) of the work wafer (100), in such a way as to form the cavity (23).

10. The manufacturing process of a MEMS device (20) according to claim 9, wherein the piezoelectric actuator (38) includes:
- an insulating piezoelectric region (51A) of aluminum nitride, extending over the deformable main body (31) laterally to the detection piezoelectric region (51B);
- an intermediate actuation electrode (60A) of conductive material, extending over the insulating piezoelectric region (51A);
- an actuation piezoelectric region (61) of piezoelectric material, extending over the intermediate actuation electrode (60A); and
- a top actuation electrode (62A) of conductive material, extending over the actuation piezoelectric region (61),
wherein the intermediate actuation electrode (60A), the actuation piezoelectric region (61) and the top actuation electrode (62A) form an actuation capacitor (56) of an active actuation structure (52A) of the piezoelectric actuator (38),
wherein the manufacturing process further comprises, between steps b and f, the steps of:
c. forming, on the first conductive layer (104), a second piezoelectric layer (106) of piezoelectric material;
d. forming, on the second piezoelectric layer (106), a second conductive layer (108) of conductive material; and
e. patterning, by chemical etching, the second conductive layer (108) and the second piezoelectric layer (106) in such a way as to form, respectively, the top actuation electrode (62A) and the actuation piezoelectric region (61) underlying the top actuation electrode (62A) along the first axis (Z), and
wherein step f of patterning the first conductive layer (104) further comprises forming the intermediate actuation electrode (60A) of the piezoelectric actuator (38) laterally to, and spaced from, the intermediate detection electrode (60B) of the strain sensor (50).

11. The manufacturing process of a MEMS device (20) according to claim 9 or 10, wherein the piezoelectric sensor element (41) further comprises:
- a passivation region (64B) of insulating material, extending over the intermediate detection electrode (60B);
- a first detection electrical connection (70D) of conductive material, extending through the passivation region (64B) of the piezoelectric sensor element (41) and in electrical contact with the intermediate detection electrode (60B); and
- a second detection electrical connection (70E) of conductive material, extending through the passivation region (64B) of the piezoelectric sensor element (41), in electrical contact with the deformable main body (31) and electrically insulated from the first detection electrical connection (70D), and
wherein the manufacturing process further comprises the step of forming the passivation region (64B) on the intermediate detection electrode (60B) and the first detection electrical connection (70D) and the second detection electrical connection (70E) through the passivation region (64B).

12. The manufacturing process of a MEMS device (20) according to claim 11, wherein the step of forming the passivation region (64B) on the intermediate detection electrode (60B) and the first detection electrical connection (70D) and the second detection electrical connection (70E) through the passivation region (64B) comprises, between steps f and i, the steps of:
g. forming a first insulating layer (110) of insulating material on the intermediate detection electrode (60B) of the strain sensor (50) and on the first piezoelectric layer (102);
h. forming a first electrical connection trench (112A) through the first insulating layer (110) in such a way as to partially expose the intermediate detection electrode (60B),
wherein step i comprises forming the first work trench (114C) also through the first insulating layer (110), the first work trench (114C) also surrounding, orthogonally to the first axis (Z), a portion of the first insulating layer (110), superimposed on the intermediate detection electrode (60B) along the first axis (Z), which forms a first insulating passivation layer (66B) of the passivation region (64B) of the piezoelectric sensor element (41),
wherein step i further comprises forming a second electrical connection trench (114A) through the first insulating layer (110) and the first piezoelectric layer (102) in such a way as to partially expose the top semiconductive region (100C) of the work wafer (100), and
wherein the step of forming the passivation region (64B) on the intermediate detection electrode (60B) and the first detection electrical connection (70D) and the second detection electrical connection (70E) through the passivation region (64B) also comprises, between steps i and p, the steps of:
j. forming a third conductive layer (116) of conductive material on the first insulating passivation layer (66B) of the passivation region (64B) of the piezoelectric sensor element (41), on the intermediate detection electrode (60B) and on the top semiconductive region (100C) of the work wafer (100);
k. patterning, by chemical etching, the third conductive layer (116) in such a way as to form, starting from the third conductive layer (116), a connection region (70') of the first detection electrical connection (70D) in the first electrical connection trench (112A), and a connection region (70') of the second detection electrical connection (70E) in the second electrical connection trench (114A) ;
1. forming a second insulating layer (118) of insulating material on the first insulating passivation layer (66B), the first detection electrical connection (70D) and the second detection electrical connection (70E), the second insulating layer (118) defining a second insulating passivation layer (68B) of the passivation region (64B) of the piezoelectric sensor element (41) and forming together with the first insulating passivation layer (66B) said passivation region (64B) of the piezoelectric sensor element (41);
m. forming third electrical connection trenches (120A, 120B) through the second insulating layer (118) in such a way as to partially expose the connection regions (70') of the first detection electrical connection (70D) and the second detection electrical connection (70E); and
n. forming respective contact pads (70") of the first detection electrical connection (70D) and the second detection electrical connection (70E), of conductive material, in the third electrical connection trenches (120A, 120B) and in electrical contact with the respective connection regions (70'), each contact pad (70") forming with the respective connection region (70') the first detection electrical connection (70D) or, respectively, the second detection electrical connection (70E).

13. The manufacturing process of a MEMS device (20) according to claim 11, wherein the piezoelectric sensor element (41) further comprises a top detection electrode (80) extending over the passivation region (64B),
wherein the top detection electrode (80), the passivation region (64B) and the intermediate detection electrode (60B) form a second detection capacitor (70") of the active detection structure (52B) of the strain sensor (50), the first detection capacitor (70') and the second detection capacitor (70") being electrically in series with each other,
wherein the active detection structure (52B) of the strain sensor (50) is configured to generate, in response to the deformation of the deformable structure (30), a second detection electric voltage between the intermediate detection electrode (60B) and the top detection electrode (80) of the second detection capacitor (70"), which is indicative of the deformation of the deformable structure (30), and
wherein the step of forming the passivation region (64B) on the intermediate detection electrode (60B) and the first detection electrical connection (70D) and the second detection electrical connection (70E) through the passivation region (64B) comprises:
g. forming a first insulating layer (110) of aluminum nitride on the intermediate detection electrode (60B) of the strain sensor (50) and on the first piezoelectric layer (102);
h. forming a first electrical connection trench (112A) through the first insulating layer (110) in such a way as to partially expose the intermediate detection electrode (60B),
wherein step i comprises forming the first work trench (114C) also through the first insulating layer (110), the first work trench (114C) also surrounding, orthogonally to the first axis (Z), a portion of the first insulating layer (110), superimposed on the intermediate detection electrode (60B) along the first axis (Z), which forms the passivation region (64B) of the piezoelectric sensor element (41),
wherein step i further comprises forming a second electrical connection trench (114A) through the first insulating layer (110) and the first piezoelectric layer (102) in such a way as to partially expose the top semiconductive region (100C) of the work wafer (100), and
wherein the step of forming the passivation region (64B) on the intermediate detection electrode (60B) and the first detection electrical connection (70D) and the second detection electrical connection (70E) through the passivation region (64B) further comprises, between steps i and p, the steps of:
j. forming a third conductive layer (116) of conductive material on the passivation region (64B) of the piezoelectric sensor element (41), on the intermediate detection electrode (60B) and on the top semiconductive region (100C) of the work wafer (100); and
k. patterning, by chemical etching, the third conductive layer (116) in such a way as to form, starting from the third conductive layer (116), the first detection electrical connection (70D) in the first electrical connection trench (112A), the second detection electrical connection (70E) in the second electrical connection trench (114A) and the top detection electrode (80) on the passivation region (64B) of the piezoelectric sensor element (41) .

14. The manufacturing process of a MEMS device (20) according to any of claims 9-13, wherein the MEMS device (20) is of mirror type, and
wherein the manufacturing process further comprises the steps of:
- forming a tiltable structure (22) elastically suspended on the cavity (23);
- forming a first and a second support arm (25A, 25B) extending between the fixed structure (24) and opposite sides of the tiltable structure (22), along a rotation axis (A) of the tiltable structure (22);
- forming a plurality of said deformable structures (30) which face opposite sides of the first support arm (25A), extend between the fixed structure (24) and said opposite sides of the first support arm (25A) or between the fixed structure (24) and the tiltable structure (22), and are electrically controllable to deform mechanically thereby generating a rotation of the tiltable structure (22) around the rotation axis (A),
wherein the strain sensors (50) of the deformable structures (30) are opposite to each other with respect to the rotation axis (A),
wherein, when the tiltable structure (22) rotates around the rotation axis (A) due to the deformable structures (30), the strain sensors (50) of the deformable structures (30) undergo respective mechanical deformations and generate respective detection signals which are indicative of the rotation of the tiltable structure (22) around the rotation axis (A) and are in phase-opposition to each other.

15. An operating method of a MEMS device (20) according to any of claims 1-8, wherein the piezoelectric actuator (38) includes:
- an insulating piezoelectric region (51A) of aluminum nitride, extending over the deformable main body (31) laterally to the detection piezoelectric region (51B);
- an intermediate actuation electrode (60A) of conductive material, extending over the insulating piezoelectric region (51A);
- an actuation piezoelectric region (61) of piezoelectric material, extending over the intermediate actuation electrode (60A); and
- a top actuation electrode (62A) of conductive material, extending over the actuation piezoelectric region (61),
wherein the intermediate actuation electrode (60A), the actuation piezoelectric region (61) and the top actuation electrode (62A) form an actuation capacitor (56) of an active actuation structure (52A) of the piezoelectric actuator (38),
the operating method of the MEMS device (20) comprising the steps of:
- biasing the intermediate actuation electrode (60A) and the deformable main body (31) to a reference electric potential;
- applying a bias electric voltage between the top actuation electrode (62A) and the intermediate actuation electrode (60A); and
- acquiring the first detection electric voltage generated by the strain sensor (50) and indicative of the deformation of the deformable structure (30).

16. An electronic apparatus (90) comprising a MEMS device (20), according to any of claims 1-8, and an electronic control module (92) operatively coupled to the MEMS device (20) and configured to acquire the first detection electric voltage, generated by the strain sensor (50) and indicative of the deformation of the deformable structure (30), and electrically control the piezoelectric actuator (38) based on the first detection electric voltage.

## Patentansprüche

1. MEMS-Vorrichtung (20), die Folgendes umfasst:
- einen Halbleiterkörper (21), der eine feste Struktur (24) und einen verformbaren Hauptkörper (31) enthält, wobei die feste Struktur (24) einen Hohlraum (23) im Halbleiterkörper (21) definiert und der verformbare Hauptkörper (31) an der festen Struktur (24) befestigt und an dem Hohlraum (23) aufgehängt ist;
- einen piezoelektrischen Aktuator (38), der sich über den verformbaren Hauptkörper (31) erstreckt; und
- ein piezoelektrisches Sensorelement (41), das sich seitlich zu dem piezoelektrischen Aktuator (38) über den verformbaren Hauptkörper (31) erstreckt und das mit dem verformbaren Hauptkörper (31) einen Dehnungssensor (50) bildet,
wobei das piezoelektrische Sensorelement (41) Folgendes umfasst:
- einen piezoelektrischen Detektionsbereich (51B) aus Aluminiumnitrid, der sich über den verformbaren Hauptkörper (31) erstreckt; und
- eine Zwischendetektionselektrode (60B), die sich über den piezoelektrischen Detektionsbereich (51B) erstreckt, wobei der verformbare Hauptkörper (31), der piezoelektrische Detektionsbereich (51B) und die Zwischendetektionselektrode (60B) einen ersten Detektionskondensator (70') einer aktiven Detektionsstruktur (52B) des Dehnungssensors (50) bilden, wobei der verformbare Hauptkörper (31) so konfiguriert ist, dass er als untere Detektionselektrode des ersten Detektionskondensators (70') arbeitet,
wobei der verformbare Hauptkörper (31), der piezoelektrische Aktuator (38) und das piezoelektrische Sensorelement (41) eine an dem Hohlraum (23) aufgehängte verformbare Struktur (30) bilden,
wobei der piezoelektrische Aktuator (38) elektrisch steuerbar ist, um eine Verformung der verformbaren Struktur (30) zu erzeugen, und
wobei die aktive Detektionsstruktur (52B) des Dehnungssensors (50) so konfiguriert ist, dass sie als Reaktion auf die Verformung der verformbaren Struktur (30) eine erste elektrische Detektionsspannung zwischen der unteren Detektionselektrode und der Zwischendetektionselektrode (60B) des ersten Detektionskondensators (70') erzeugt, die die Verformung der verformbaren Struktur (30) anzeigt.

2. MEMS-Vorrichtung (20) nach Anspruch 1, wobei das piezoelektrische Sensorelement (41) ferner Folgendes umfasst:
- einen Passivierungsbereich (64B) aus Isoliermaterial, der sich über die Zwischendetektionselektrode (60B) erstreckt;
- eine erste elektrische Detektionsverbindung (70D) aus leitfähigem Material, die sich durch den Passivierungsbereich (64B) des piezoelektrischen Sensorelements (41) erstreckt und in elektrischem Kontakt mit der Zwischendetektionselektrode (60B) steht; und
- eine zweite elektrische Detektionsverbindung (70E) aus leitfähigem Material, die sich durch den Passivierungsbereich (64B) des piezoelektrischen Sensorelements (41) erstreckt, in elektrischem Kontakt mit dem verformbaren Hauptkörper (31) steht und von der ersten elektrischen Detektionsverbindung (70D) elektrisch isoliert ist.

3. MEMS-Vorrichtung (20) nach Anspruch 2, wobei der Passivierungsbereich (64B) monolithisch ist und aus Aluminiumnitrid besteht.

4. MEMS-Vorrichtung (20) nach Anspruch 3, wobei das piezoelektrische Sensorelement (41) ferner eine obere Detektionselektrode (80) umfasst, die sich über den Passivierungsbereich (64B) erstreckt,
wobei die obere Detektionselektrode (80), der Passivierungsbereich (64B) und die Zwischendetektionselektrode (60B) einen zweiten Detektionskondensator (70") der aktiven Detektionsstruktur (52B) des Dehnungssensors (50) bilden, wobei der erste Detektionskondensator (70') und der zweite Detektionskondensator (70") elektrisch in Reihe miteinander geschaltet sind,
wobei die aktive Detektionsstruktur (52B) des Dehnungssensors (50) ferner so konfiguriert ist, dass sie als Reaktion auf die Verformung der verformbaren Struktur (30) eine zweite elektrische Detektionsspannung zwischen der Zwischendetektionselektrode (60B) und der oberen Detektionselektrode (80) des zweiten Detektionskondensators (70") erzeugt, die die Verformung der verformbaren Struktur (30) anzeigt.

5. MEMS-Vorrichtung (20) nach einem der vorhergehenden Ansprüche, wobei der verformbare Hauptkörper (31) aus dotiertem Halbleitermaterial besteht und einen elektrischen Widerstand von weniger als oder gleich 30 mΩ·cm aufweist.

6. MEMS-Vorrichtung (20) nach einem der vorhergehenden Ansprüche, wobei der piezoelektrische Aktuator (38) Folgendes enthält:
- einen isolierenden piezoelektrischen Bereich (51A) aus Aluminiumnitrid, der sich seitlich zu dem piezoelektrischen Detektionsbereich (51B) über den verformbaren Hauptkörper (31) erstreckt;
- eine Zwischenbetätigungselektrode (60A) aus leitfähigem Material, die sich über den isolierenden piezoelektrischen Bereich (51A) erstreckt;
- einen piezoelektrischen Betätigungsbereich (61) aus piezoelektrischem Material, der sich über die Zwischenbetätigungselektrode (60A) erstreckt; und
- eine obere Betätigungselektrode (62A) aus leitfähigem Material, die sich über den piezoelektrischen Betätigungsbereich (61) erstreckt,
wobei die Zwischenbetätigungselektrode (60A), der piezoelektrische Betätigungsbereich (61) und die obere Betätigungselektrode (62A) einen Betätigungskondensator (56) einer aktiven Betätigungsstruktur (52A) des piezoelektrischen Aktuators (38) bilden.

7. MEMS-Vorrichtung (20) nach Anspruch 6, wobei der piezoelektrische Aktuator (38) ferner Folgendes umfasst:
- einen jeweiligen Passivierungsbereich (64A) aus Isoliermaterial, der sich über die obere Betätigungselektrode (62A) erstreckt;
- eine erste elektrische Betätigungsverbindung (70A) aus leitfähigem Material, die sich durch den Passivierungsbereich (64A) des piezoelektrischen Aktuators (38) erstreckt und in elektrischem Kontakt mit der oberen Betätigungselektrode (62A) steht; und
- eine zweite elektrische Betätigungsverbindung (70B) aus leitfähigem Material, die sich durch den Passivierungsbereich (64A) des piezoelektrischen Aktuators (38) erstreckt und von der ersten elektrischen Betätigungsverbindung (70A) elektrisch isoliert ist, und wobei die zweite elektrische Betätigungsverbindung (70B) in elektrischem Kontakt mit dem verformbaren Hauptkörper (31) und mit der Zwischenbetätigungselektrode (60A) steht, oder
wobei die zweite elektrische Betätigungsverbindung (70B) in elektrischem Kontakt mit der Zwischenbetätigungselektrode (60A) steht und der piezoelektrische Aktuator (38) ferner eine dritte elektrische Betätigungsverbindung (70C) aus leitfähigem Material umfasst, die sich durch den Passivierungsbereich (64A) des piezoelektrischen Aktuators (38) erstreckt, von der ersten elektrischen Betätigungsverbindung (70A) und der zweiten elektrischen Betätigungsverbindung (70B) elektrisch isoliert ist und in elektrischem Kontakt mit dem verformbaren Hauptkörper (31) steht.

8. MEMS-Vorrichtung (20) nach einem der vorhergehenden Ansprüche, wobei die MEMS-Vorrichtung (20) von dem Spiegeltyp ist und ferner Folgendes umfasst:
- eine kippbare Struktur (22), die elastisch an dem Hohlraum (23) aufgehängt ist;
- einen ersten und einen zweiten Stützarm (25A, 25B), die sich zwischen der festen Struktur (24) und gegenüberliegenden Seiten der kippbaren Struktur (22) entlang einer Drehachse (A) der kippbaren Struktur (22) erstrecken;
- eine Vielzahl der verformbaren Strukturen (30), die gegenüberliegenden Seiten des ersten Stützarms (25A) zugewandt sind, sich zwischen der festen Struktur (24) und den gegenüberliegenden Seiten des ersten Stützarms (25A) oder zwischen der festen Struktur (24) und der kippbaren Struktur (22) erstrecken und elektrisch steuerbar sind, um sich mechanisch zu verformen, wodurch eine Drehung der kippbaren Struktur (22) um die Drehachse (A) erzeugt wird, wobei sich die Dehnungssensoren (50) der verformbaren Strukturen (30) in Bezug auf die Drehachse (A) gegenüberliegen, und
wobei, wenn sich die kippbare Struktur (22) aufgrund der verformbaren Strukturen (30) um die Drehachse (A) dreht, die Dehnungssensoren (50) der verformbaren Strukturen (30) jeweilige mechanische Verformungen durchlaufen und jeweilige Detektionssignale erzeugen, die die Drehung der kippbaren Struktur (22) um die Drehachse (A) anzeigen und sich in Gegenphasen zueinander befinden.

9. Herstellungsverfahren einer MEMS-Vorrichtung (20) nach einem der Ansprüche 1-8, das die folgenden Schritte umfasst:
a. Bilden einer ersten piezoelektrischen Schicht (102) aus Aluminiumnitrid auf einer ersten Oberfläche (100') eines Arbeitswafers (100) mit einem unteren Halbleiterbereich (100A) aus Halbleitermaterial und einem oberen Halbleiterbereich (100C) aus Halbleitermaterial, die entlang einer ersten Achse (Z) auf dem unteren Halbleiterbereich (100A) des Arbeitswafers (100) liegt und die erste Oberfläche (100') des Arbeitswafers (100) definiert, wobei der Arbeitswafer (100) auch eine zweite Oberfläche (100") aufweist, die der ersten Oberfläche (100') entlang der ersten Achse (Z) gegenüberliegt;
b. Bilden einer ersten leitfähigen Schicht (104) aus leitfähigem Material auf der ersten piezoelektrischen Schicht (102);
f. Strukturieren, durch chemisches Ätzen, der ersten leitfähigen Schicht (104), derart, dass sie die Zwischendetektionselektrode (60B) des Dehnungssensors (50) bildet;
i. Bilden, durch chemisches Ätzen, eines ersten Arbeitsgrabens (114C) durch die erste piezoelektrische Schicht (102) bis der obere Halbleiterbereich (100C) des Arbeitswafers (100) freigelegt wird, wobei der erste Arbeitsgraben (114C) orthogonal zu der ersten Achse (Z) einen Abschnitt der ersten piezoelektrischen Schicht (102) umgibt, der unter der Zwischendetektionselektrode (60B) entlang der ersten Achse (Z) liegt und der den piezoelektrischen Detektionsbereich (51B) bildet;
p. Bilden, durch chemisches Ätzen, eines planaren Profilgrabens (124) durch den oberen Halbleiterbereich (100C) des Arbeitswafers (100), wobei der planare Profilgraben (124) teilweise umgebend, orthogonal zu der ersten Achse (Z) einen Abschnitt des oberen halbleitenden Bereichs (100C) des Arbeitswafers (100), der dem piezoelektrischen Detektionsbereich (51B) unterliegt und angepasst ist, um den verformbaren Hauptkörper (31) zu bilden, und physikalisch trennend, orthogonal zu der ersten Achse (Z), einen Teil des Abschnitts des oberen halbleitenden Bereichs (100C) von dem verbleibenden Teil des oberen halbleitenden Bereichs (100C) des Arbeitswafers (100), derart, dass orthogonal zu der ersten Achse (Z) ein planares Profil des verformbaren Hauptkörpers (31) definiert ist; und
q. Entfernen, durch chemisches Ätzen, das ausgehend von der zweiten Oberfläche (100") des Arbeitswafers (100) durchgeführt wird, eines Abschnitts des unteren Halbleiterbereichs (100A) des Arbeitswafers (100), der unter dem verformbaren Hauptkörper (31) liegt, bis der obere Halbleiterbereich (100C) des Arbeitswafers (100) freigelegt wird, derart, dass der Hohlraum (23) gebildet wird.

10. Herstellungsverfahren einer MEMS-Vorrichtung (20) nach Anspruch 9, wobei der piezoelektrische Aktuator (38) Folgendes enthält:
- einen isolierenden piezoelektrischen Bereich (51A) aus Aluminiumnitrid, der sich seitlich zu dem piezoelektrischen Detektionsbereich (51B) über den verformbaren Hauptkörper (31) erstreckt;
- eine Zwischenbetätigungselektrode (60A) aus leitfähigem Material, die sich über den isolierenden piezoelektrischen Bereich (51A) erstreckt;
- einen piezoelektrischen Betätigungsbereich (61) aus piezoelektrischem Material, der sich über die Zwischenbetätigungselektrode (60A) erstreckt; und
- eine obere Betätigungselektrode (62A) aus leitfähigem Material, die sich über den piezoelektrischen Betätigungsbereich (61) erstreckt,
wobei die Zwischenbetätigungselektrode (60A), der piezoelektrische Betätigungsbereich (61) und die obere Betätigungselektrode (62A) einen Betätigungskondensator (56) einer aktiven Betätigungsstruktur (52A) des piezoelektrischen Aktuators (38) bilden,
wobei das Herstellungsverfahren ferner zwischen den Schritten b und f die folgenden Schritte umfasst:
c. Bilden einer zweiten piezoelektrischen Schicht (106) aus piezoelektrischem Material auf der ersten leitfähigen Schicht (104);
d. Bilden einer zweiten leitfähigen Schicht (108) aus leitfähigem Material auf der zweiten piezoelektrischen Schicht (106); und
e. Strukturieren, durch chemisches Ätzen, der zweiten leitfähigen Schicht (108) und der zweiten piezoelektrischen Schicht (106), derart, dass sie jeweils die obere Betätigungselektrode (62A) und den unter der oberen Betätigungselektrode (62A) liegenden piezoelektrischen Bereich (61) entlang der ersten Achse (Z) bilden, und
wobei der Schritt f des Strukturierens der ersten leitfähigen Schicht (104) ferner das Bilden der Zwischenbetätigungselektrode (60A) des piezoelektrischen Aktuators (38) seitlich zu und beabstandet von der Zwischendetektionselektrode (60B) des Dehnungssensors (50) umfasst.

11. Herstellungsverfahren einer MEMS-Vorrichtung (20) nach Anspruch 9 oder 10, wobei das piezoelektrische Sensorelement (41) ferner Folgendes umfasst:
- einen Passivierungsbereich (64B) aus Isoliermaterial, der sich über die Zwischendetektionselektrode (60B) erstreckt;
- eine erste elektrische Detektionsverbindung (70D) aus leitfähigem Material, die sich durch den Passivierungsbereich (64B) des piezoelektrischen Sensorelements (41) erstreckt und in elektrischem Kontakt mit der Zwischendetektionselektrode (60B) steht; und
- eine zweite elektrische Detektionsverbindung (70E) aus leitfähigem Material, die sich durch den Passivierungsbereich (64B) des piezoelektrischen Sensorelements (41) erstreckt, in elektrischem Kontakt mit dem verformbaren Hauptkörper (31) steht und von der ersten elektrischen Detektionsverbindung (70D) elektrisch isoliert ist, und
wobei das Herstellungsverfahren ferner den Schritt des Bildens des Passivierungsbereichs (64B) auf der Zwischendetektionselektrode (60B) und der ersten elektrischen Detektionsverbindung (70D) und der zweiten elektrischen Detektionsverbindung (70E) durch den Passivierungsbereich (64B) umfasst.

12. Herstellungsverfahren einer MEMS-Vorrichtung (20) nach Anspruch 11, wobei der Schritt des Bildens des Passivierungsbereichs (64B) auf der Zwischendetektionselektrode (60B) und der ersten elektrischen Detektionsverbindung (70D) und der zweiten elektrischen Detektionsverbindung (70E) durch den Passivierungsbereich (64B) zwischen den Schritten f und i die folgenden Schritte umfasst:
g. Bilden einer ersten Isolierschicht (110) aus Isoliermaterial auf der Zwischendetektionselektrode (60B) des Dehnungssensors (50) und auf der ersten piezoelektrischen Schicht (102);
h. Bilden eines ersten elektrischen Verbindungsgrabens (112A) durch die erste Isolierschicht (110), derart, dass die Zwischendetektionselektrode (60B) teilweise freigelegt wird,
wobei Schritt i das Bilden des ersten Arbeitsgrabens (114C) auch durch die erste Isolierschicht (110) umfasst, wobei der erste Arbeitsgraben (114C) orthogonal zu der ersten Achse (Z) auch einen Abschnitt der ersten Isolierschicht (110) umgibt, der entlang der ersten Achse (Z) auf der Zwischendetektionselektrode (60B) liegt und eine erste isolierende Passivierungsschicht (66B) des Passivierungsbereichs (64B) des piezoelektrischen Sensorelements (41) bildet,
wobei Schritt i ferner das Bilden eines zweiten elektrischen Verbindungsgrabens (114A) durch die erste Isolierschicht (110) und die erste piezoelektrische Schicht (102) umfasst, derart, dass der obere Halbleiterbereich (100C) des Arbeitswafers (100) teilweise freigelegt wird, und
wobei der Schritt des Bildens des Passivierungsbereichs (64B) auf der Zwischendetektionselektrode (60B) und der ersten elektrischen Detektionsverbindung (70D) und der zweiten elektrischen Detektionsverbindung (70E) durch den Passivierungsbereich (64B) zwischen den Schritten i und p auch die folgenden Schritte umfasst:
j. Bilden einer dritten leitfähigen Schicht (116) aus leitfähigem Material auf der ersten isolierenden Passivierungsschicht (66B) des Passivierungsbereichs (64B) des piezoelektrischen Sensorelements (41), auf der Zwischendetektionselektrode (60B) und auf dem oberen Halbleiterbereich (100C) des Arbeitswafers (100);
k. Strukturieren, durch chemisches Ätzen, der dritten leitfähigen Schicht (116), derart, dass ausgehend von der dritten leitfähigen Schicht (116) ein Verbindungsbereich (70') der ersten elektrischen Detektionsverbindung (70D) im ersten elektrischen Verbindungsgraben (112A) und ein Verbindungsbereich (70') der zweiten elektrischen Detektionsverbindung (70E) im zweiten elektrischen Verbindungsgraben (114A) gebildet wird;
1. Bilden einer zweiten Isolierschicht (118) aus Isoliermaterial auf der ersten isolierenden Passivierungsschicht (66B), der ersten elektrischen Detektionsverbindung (70D) und der zweiten elektrischen Detektionsverbindung (70E), wobei die zweite Isolierschicht (118) eine zweite isolierende Passivierungsschicht (68B) des Passivierungsbereichs (64B) des piezoelektrischen Sensorelements (41) definiert und zusammen mit der ersten isolierenden Passivierungsschicht (66B) den Passivierungsbereich (64B) des piezoelektrischen Sensorelements (41) bildet;
m. Bilden dritter elektrischer Verbindungsgräben (120A, 120B) durch die zweite Isolierschicht (118), derart, dass die Verbindungsbereiche (70') der ersten elektrischen Detektionsverbindung (70D) und der zweiten elektrischen Detektionsverbindung (70E) teilweise freigelegt werden; und
n. Bilden von jeweiligen Kontaktpads (70") der ersten elektrischen Detektionsverbindung (70D) und der zweiten elektrischen Detektionsverbindung (70E) aus leitfähigem Material in den dritten elektrischen Verbindungsgräben (120A, 120B) und in elektrischem Kontakt mit den jeweiligen Verbindungsbereichen (70'), wobei jedes Kontaktpad (70") mit dem jeweiligen Verbindungsbereich (70') die erste elektrische Detektionsverbindung (70D) beziehungsweise die zweite elektrische Detektionsverbindung (70E) bildet.

13. Herstellungsverfahren einer MEMS-Vorrichtung (20) nach Anspruch 11, wobei das piezoelektrische Sensorelement (41) ferner eine obere Detektionselektrode (80) umfasst, die sich über den Passivierungsbereich (64B) erstreckt, wobei die obere Detektionselektrode (80), der Passivierungsbereich (64B) und die Zwischendetektionselektrode (60B) einen zweiten Detektionskondensator (70") der aktiven Detektionsstruktur (52B) des Dehnungssensors (50) bilden, wobei der erste Detektionskondensator (70') und der zweite Detektionskondensator (70") elektrisch in Reihe miteinander geschaltet sind,
wobei die aktive Detektionsstruktur (52B) des Dehnungssensors (50) so konfiguriert ist, dass sie als Reaktion auf die Verformung der verformbaren Struktur (30) eine zweite elektrische Detektionsspannung zwischen der Zwischendetektionselektrode (60B) und der oberen Detektionselektrode (80) des zweiten Detektionskondensators (70") erzeugt, die die Verformung der verformbaren Struktur (30) anzeigt, und
wobei der Schritt des Bildens des Passivierungsbereichs (64B) auf der Zwischendetektionselektrode (60B) und der ersten elektrischen Detektionsverbindung (70D) und der zweiten elektrischen Detektionsverbindung (70E) durch den Passivierungsbereich (64B) Folgendes umfasst:
g. Bilden einer ersten Isolierschicht (110) aus Aluminiumnitrid auf der Zwischendetektionselektrode (60B) des Dehnungssensors (50) und auf der ersten piezoelektrischen Schicht (102);
h. Bilden eines ersten elektrischen Verbindungsgrabens (112A) durch die erste Isolierschicht (110), derart, dass die Zwischendetektionselektrode (60B) teilweise freigelegt wird,
wobei Schritt i das Bilden des ersten Arbeitsgrabens (114C) auch durch die erste Isolierschicht (110) umfasst, wobei der erste Arbeitsgraben (114C) orthogonal zu der ersten Achse (Z) auch einen Abschnitt der ersten Isolierschicht (110) umgibt, der entlang der ersten Achse (Z) auf Zwischendetektionselektrode (60B) liegt und den Passivierungsbereich (64B) des piezoelektrischen Sensorelements (41) bildet,
wobei Schritt i ferner das Bilden eines zweiten elektrischen Verbindungsgrabens (114A) durch die erste Isolierschicht (110) und die erste piezoelektrische Schicht (102) umfasst, derart, dass der obere Halbleiterbereich (100C) des Arbeitswafers (100) teilweise freigelegt wird, und
wobei der Schritt des Bildens des Passivierungsbereichs (64B) auf der Zwischendetektionselektrode (60B) und der ersten elektrischen Detektionsverbindung (70D) und der zweiten elektrischen Detektionsverbindung (70E) durch den Passivierungsbereich (64B) zwischen den Schritten i und p ferner die folgenden Schritte umfasst:
j. Bilden einer dritten leitfähigen Schicht (116) aus leitfähigem Material auf dem Passivierungsbereich (64B) des piezoelektrischen Sensorelements (41), auf der Zwischendetektionselektrode (60B) und auf dem oberen Halbleiterbereich (100C) des Arbeitswafers (100); und
k. Strukturieren, durch chemisches Ätzen, der dritten leitfähigen Schicht (116), derart, dass ausgehend von der dritten leitfähigen Schicht (116) die erste elektrische Detektionsverbindung (70D) im ersten elektrischen Verbindungsgraben (112A), die zweite elektrische Detektionsverbindung (70E) im zweiten elektrischen Verbindungsgraben (114A) und die obere Detektionselektrode (80) auf dem Passivierungsbereich (64B) des piezoelektrischen Sensorelements (41) gebildet werden.

14. Herstellungsverfahren einer MEMS-Vorrichtung (20) nach einem der Ansprüche 9-13, wobei die MEMS-Vorrichtung (20) von dem Spiegeltyp ist, und
wobei das Herstellungsverfahren ferner die folgenden Schritte umfasst:
- Bilden einer kippbaren Struktur (22), die elastisch an dem Hohlraum (23) aufgehängt ist;
- Bilden eines ersten und eines zweiten Stützarms (25A, 25B), die sich zwischen der festen Struktur (24) und gegenüberliegenden Seiten der kippbaren Struktur (22) entlang einer Drehachse (A) der kippbaren Struktur (22) erstrecken;
- Bilden einer Vielzahl der verformbaren Strukturen (30), die gegenüberliegenden Seiten des ersten Stützarms (25A) zugewandt sind, sich zwischen der festen Struktur (24) und den gegenüberliegenden Seiten des ersten Stützarms (25A) oder zwischen der festen Struktur (24) und der kippbaren Struktur (22) erstrecken und elektrisch steuerbar sind, um sich mechanisch zu verformen, wodurch eine Drehung der kippbaren Struktur (22) um die Drehachse (A) erzeugt wird, wobei sich die Dehnungssensoren (50) der verformbaren Strukturen (30) in Bezug auf die Drehachse (A) gegenüberliegen,
wobei, wenn sich die kippbare Struktur (22) aufgrund der verformbaren Strukturen (30) um die Drehachse (A) dreht, die Dehnungssensoren (50) der verformbaren Strukturen (30) jeweilige mechanische Verformungen durchlaufen und jeweilige Detektionssignale erzeugen, die die Drehung der kippbaren Struktur (22) um die Drehachse (A) anzeigen und sich in Gegenphasen zueinander befinden.

15. Betriebsverfahren einer MEMS-Vorrichtung (20) nach einem der Ansprüche 1-8, wobei der piezoelektrische Aktuator (38) Folgendes enthält:
- einen isolierenden piezoelektrischen Bereich (51A) aus Aluminiumnitrid, der sich seitlich zu dem piezoelektrischen Detektionsbereich (51B) über den verformbaren Hauptkörper (31) erstreckt;
- eine Zwischenbetätigungselektrode (60A) aus leitfähigem Material, die sich über den isolierenden piezoelektrischen Bereich (51A) erstreckt;
- einen piezoelektrischen Betätigungsbereich (61) aus piezoelektrischem Material, der sich über die Zwischenbetätigungselektrode (60A) erstreckt; und
- eine obere Betätigungselektrode (62A) aus leitfähigem Material, die sich über den piezoelektrischen Betätigungsbereich (61) erstreckt,
wobei die Zwischenbetätigungselektrode (60A), der piezoelektrische Betätigungsbereich (61) und die obere Betätigungselektrode (62A) einen Betätigungskondensator (56) einer aktiven Betätigungsstruktur (52A) des piezoelektrischen Aktuators (38) bilden,
wobei das Betriebsverfahren der MEMS-Vorrichtung (20) die folgenden Schritte umfasst:
- Vorspannen der Zwischenbetätigungselektrode (60A) und des verformbaren Hauptkörpers (31) auf ein elektrisches Referenzpotenzial;
- Anlegen einer elektrischen Vorspannung zwischen der oberen Betätigungselektrode (62A) und der Zwischenbetätigungselektrode (60A); und
- Erfassen der von dem Dehnungssensor (50) erzeugten ersten elektrischen Detektionsspannung, die die Verformung der verformbaren Struktur (30) anzeigt.

16. Elektronisches Gerät (90), das eine MEMS-Vorrichtung (20) nach einem der Ansprüche 1-8 und ein elektronisches Steuermodul (92) umfasst, das operativ mit der **MEMS-**Vorrichtung (20) gekoppelt und so konfiguriert ist, dass es die von dem Dehnungssensor (50) erzeugte erste elektrische Detektionsspannung, die die Verformung der verformbaren Struktur (30) anzeigt, erfasst und den piezoelektrischen Aktuator (38) basierend auf der ersten elektrischen Detektionsspannung elektrisch steuert.

## Revendications

1. Dispositif MEMS (20) comprenant :
- un corps semi-conducteur (21) comportant une structure fixe (24) et un corps principal déformable (31), la structure fixe (24) définissant une cavité (23) dans le corps semi-conducteur (21) et le corps principal déformable (31) étant fixé à la structure fixe (24) et suspendu sur la cavité (23) ;
- un actionneur piézoélectrique (38) s'étendant sur le corps principal déformable (31) ; et
- un élément capteur piézoélectrique (41) qui s'étend sur le corps principal déformable (31), latéralement à l'actionneur piézoélectrique (38), et qui forme avec le corps principal déformable (31) un capteur de contrainte (50),
dans lequel l'élément capteur piézoélectrique (41) comprend :
- une région piézoélectrique de détection (51B) de nitrure d'aluminium, s'étendant sur le corps principal déformable (31) ; et
- une électrode de détection intermédiaire (60B) s'étendant sur la région piézoélectrique de détection (51B),
dans lequel le corps principal déformable (31), la région piézoélectrique de détection (51B) et l'électrode de détection intermédiaire (60B) forment un premier condensateur de détection (70') d'une structure de détection active (52B) du capteur de contrainte (50), le corps principal déformable (31) étant configuré pour fonctionner en tant qu'électrode de détection inférieure du premier condensateur de détection (70'),
dans lequel le corps principal déformable (31), l'actionneur piézoélectrique (38) et l'élément capteur piézoélectrique (41) forment une structure déformable (30) suspendue sur la cavité (23),
dans lequel l'actionneur piézoélectrique (38) est électriquement commandable pour générer une déformation de la structure déformable (30), et
dans lequel la structure de détection active (52B) du capteur de contrainte (50) est configurée pour générer, en réponse à la déformation de la structure déformable (30), une première tension électrique de détection entre l'électrode de détection inférieure et l'électrode de détection intermédiaire (60B) du premier condensateur de détection (70'), qui est indicative de la déformation de la structure déformable (30).

2. Dispositif MEMS (20) selon la revendication 1, dans lequel l'élément capteur piézoélectrique (41) comprend en outre :
- une région de passivation (64B) de matériau isolant, s'étendant sur l'électrode de détection intermédiaire (60B) ;
- une première connexion électrique de détection (70D) de matériau conducteur, s'étendant à travers la région de passivation (64B) de l'élément capteur piézoélectrique (41) et en contact électrique avec l'électrode de détection intermédiaire (60B) ; et
- une seconde connexion électrique de détection (70E) de matériau conducteur, s'étendant à travers la région de passivation (64B) de l'élément capteur piézoélectrique (41), en contact électrique avec le corps principal déformable (31) et isolée électriquement de la première connexion électrique de détection (70D).

3. Dispositif MEMS (20) selon la revendication 2, dans lequel la région de passivation (64B) est monolithique et est composée de nitrure d'aluminium.

4. Dispositif MEMS (20) selon la revendication 3, dans lequel l'élément capteur piézoélectrique (41) comprend en outre une électrode de détection supérieure (80) s'étendant sur la région de passivation (64B),
dans lequel l'électrode de détection supérieure (80), la région de passivation (64B) et l'électrode de détection intermédiaire (60B) forment un second condensateur de détection (70'') de la structure de détection active (52B) du capteur de contrainte (50), le premier condensateur de détection (70') et le second condensateur de détection (70") étant électriquement en série l'un avec l'autre,
dans lequel la structure de détection active (52B) du capteur de contrainte (50) est en outre configurée pour générer, en réponse à la déformation de la structure déformable (30), une seconde tension électrique de détection entre l'électrode de détection intermédiaire (60B) et l'électrode de détection supérieure (80) du second condensateur de détection (70"), qui est indicative de la déformation de la structure déformable (30).

5. Dispositif MEMS (20) selon l'une quelconque des revendications précédentes, dans lequel le corps principal déformable (31) est composé d'un matériau semi-conducteur dopé et présente une résistivité électrique inférieure ou égale à 30 mΩ·cm.

6. Dispositif MEMS (20) selon l'une quelconque des revendications précédentes, dans lequel l'actionneur piézoélectrique (38) comporte :
- une région piézoélectrique isolante (51A) de nitrure d'aluminium, s'étendant sur le corps principal déformable (31) latéralement à la région piézoélectrique de détection (51B) ;
- une électrode d'actionnement intermédiaire (60A) de matériau conducteur, s'étendant sur la région piézoélectrique isolante (51A) ;
- une région piézoélectrique d'actionnement (61) de matériau piézoélectrique, s'étendant sur l'électrode d'actionnement intermédiaire (60A) ; et
- une électrode d'actionnement supérieure (62A) de matériau conducteur, s'étendant sur la région piézoélectrique d'actionnement (61),
dans lequel l'électrode d'actionnement intermédiaire (60A), la région piézoélectrique d'actionnement (61) et l'électrode d'actionnement supérieure (62A) forment un condensateur d'actionnement (56) d'une structure d'actionnement active (52A) de l'actionneur piézoélectrique (38).

7. Dispositif MEMS (20) selon la revendication 6, dans lequel l'actionneur piézoélectrique (38) comprend en outre :
- une région de passivation (64A) respective de matériau isolant, s'étendant sur l'électrode d'actionnement supérieure (62A) ;
- une première connexion électrique d'actionnement (70A) de matériau conducteur, s'étendant à travers la région de passivation (64A) de l'actionneur piézoélectrique (38) et en contact électrique avec l'électrode d'actionnement supérieure (62A) ; et
- une deuxième connexion électrique d'actionnement (70B) de matériau conducteur, s'étendant à travers la région de passivation (64A) de l'actionneur piézoélectrique (38) et isolée électriquement de la première connexion électrique d'actionnement (70A), et
dans lequel la deuxième connexion électrique d'actionnement (70B) est en contact électrique avec le corps principal déformable (31) et avec l'électrode d'actionnement intermédiaire (60A), ou
dans lequel la deuxième connexion électrique d'actionnement (70B) est en contact électrique avec l'électrode d'actionnement intermédiaire (60A) et l'actionneur piézoélectrique (38) comprend en outre une troisième connexion électrique d'actionnement (70C) de matériau conducteur, qui s'étend à travers la région de passivation (64A) de l'actionneur piézoélectrique (38), est isolée électriquement de la première connexion électrique d'actionnement (70A) et de la deuxième connexion électrique d'actionnement (70B) et est en contact électrique avec le corps principal déformable (31).

8. Dispositif MEMS (20) selon l'une quelconque des revendications précédentes, dans lequel le dispositif MEMS (20) est de type miroir et comprend en outre :
- une structure inclinable (22) suspendue élastiquement sur la cavité (23) ;
- des premier et second bras de support (25A, 25B) s'étendant entre la structure fixe (24) et des côtés opposés de la structure inclinable (22), le long d'un axe de rotation (A) de la structure inclinable (22) ;
- une pluralité desdites structures déformables (30) qui font face à des côtés opposés du premier bras de support (25A), s'étendent entre la structure fixe (24) et lesdits côtés opposés du premier bras de support (25A) ou entre la structure fixe (24) et la structure inclinable (22), et sont électriquement commandables pour se déformer mécaniquement, générant ainsi une rotation de la structure inclinable (22) autour de l'axe de rotation (A),
dans lequel les capteurs de contrainte (50) des structures déformables (30) sont opposés les uns aux autres par rapport à l'axe de rotation (A), et
dans lequel, lorsque la structure inclinable (22) tourne autour de l'axe de rotation (A) en raison des structures déformables (30), les capteurs de contrainte (50) des structures déformables (30) subissent des déformations mécaniques respectives et génèrent des signaux de détection respectifs qui sont indicatifs de la rotation de la structure inclinable (22) autour de l'axe de rotation (A) et sont en opposition de phase les uns par rapport aux autres.

9. Processus de fabrication d'un dispositif MEMS (20) selon l'une quelconque des revendications 1 à 8, comprenant les étapes de :
a. formation d'une première couche piézoélectrique (102) de nitrure d'aluminium sur une première surface (100') d'une plaquette de travail (100) comprenant une région semi-conductrice inférieure (100A) de matériau semi-conducteur et une région semi-conductrice supérieure (100C) de matériau semi-conducteur, superposée le long d'un premier axe (Z) sur la région semi-conductrice inférieure (100A) de la plaquette de travail (100) et définissant ladite première surface (100') de la plaquette de travail (100), la plaquette de travail (100) présentant également une seconde surface (100") opposée à la première surface (100') le long du premier axe (Z) ;
b. formation, sur la première couche piézoélectrique (102), d'une première couche conductrice (104) de matériau conducteur ;
f. formation de motifs, par gravure chimique, sur la première couche conductrice (104) de manière à former l'électrode de détection intermédiaire (60B) du capteur de contrainte (50) ;
i. formation, par gravure chimique, d'une première tranchée de travail (114C) à travers la première couche piézoélectrique (102) et jusqu'à l'exposition de la région semi-conductrice supérieure (100C) de la plaquette de travail (100), la première tranchée de travail (114C) entourant, orthogonalement au premier axe (Z), une partie de la première couche piézoélectrique (102) qui est sous-jacente à l'électrode de détection intermédiaire (60B) le long du premier axe (Z) et qui forme la région piézoélectrique de détection (51B) ;
p. formation, par gravure chimique, d'une tranchée de profil planaire (124) à travers la région semi-conductrice supérieure (100C) de la plaquette de travail (100), la tranchée de profil planaire (124) entourant partiellement, orthogonalement au premier axe (Z), une partie de la région semi-conductrice supérieure (100C) de la plaquette de travail (100), sous-jacente à la région piézoélectrique de détection (51B) et conçue pour former le corps principal déformable (31), et séparant physiquement, orthogonalement au premier axe (Z), une partie de ladite partie de la région semi-conductrice supérieure (100C) de la partie restante de la région semi-conductrice supérieure (100C) de la plaquette de travail (100) de manière à définir, orthogonalement au premier axe (Z), un profil planaire du corps principal déformable (31) ; et
q. élimination, par gravure chimique réalisée à partir de la seconde surface (100") de la plaquette de travail (100), d'une partie de la région semi-conductrice inférieure (100A) de la plaquette de travail (100) sous-jacente au corps principal déformable (31), jusqu'à l'exposition de la région semi-conductrice supérieure (100C) de la plaquette de travail (100), de manière à former la cavité (23).

10. Processus de fabrication d'un dispositif MEMS (20) selon la revendication 9, dans lequel l'actionneur piézoélectrique (38) comporte :
- une région piézoélectrique isolante (51A) de nitrure d'aluminium, s'étendant sur le corps principal déformable (31) latéralement à la région piézoélectrique de détection (51B) ;
- une électrode d'actionnement intermédiaire (60A) de matériau conducteur, s'étendant sur la région piézoélectrique isolante (51A) ;
- une région piézoélectrique d'actionnement (61) de matériau piézoélectrique, s'étendant sur l'électrode d'actionnement intermédiaire (60A) ; et
- une électrode d'actionnement supérieure (62A) de matériau conducteur, s'étendant sur la région piézoélectrique d'actionnement (61),
dans lequel l'électrode d'actionnement intermédiaire (60A), la région piézoélectrique d'actionnement (61) et l'électrode d'actionnement supérieure (62A) forment un condensateur d'actionnement (56) d'une structure d'actionnement active (52A) de l'actionneur piézoélectrique (38),
dans lequel le processus de fabrication comprend en outre, entre les étapes b et f, les étapes de :
c. formation, sur la première couche conductrice (104), d'une seconde couche piézoélectrique (106) de matériau piézoélectrique ;
d. formation, sur la seconde couche piézoélectrique (106), d'une deuxième couche conductrice (108) de matériau conducteur ; et
e. formation de motifs, par gravure chimique, sur la deuxième couche conductrice (108) et la seconde couche piézoélectrique (106) de manière à former, respectivement, l'électrode d'actionnement supérieure (62A) et la région piézoélectrique d'actionnement (61) sous-jacente à l'électrode d'actionnement supérieure (62A) le long du premier axe (Z), et
dans lequel l'étape f de formation de motifs sur la première couche conductrice (104) comprend en outre la formation de l'électrode d'actionnement intermédiaire (60A) de l'actionneur piézoélectrique (38) latéralement par rapport à, et espacée de, l'électrode de détection intermédiaire (60B) du capteur de contrainte (50).

11. Processus de fabrication d'un dispositif MEMS (20) selon la revendication 9 ou 10, dans lequel l'élément capteur piézoélectrique (41) comprend en outre :
- une région de passivation (64B) de matériau isolant, s'étendant sur l'électrode de détection intermédiaire (60B) ;
- une première connexion électrique de détection (70D) de matériau conducteur, s'étendant à travers la région de passivation (64B) de l'élément capteur piézoélectrique (41) et en contact électrique avec l'électrode de détection intermédiaire (60B) ; et
- une seconde connexion électrique de détection (70E) de matériau conducteur, s'étendant à travers la région de passivation (64B) de l'élément capteur piézoélectrique (41), en contact électrique avec le corps principal déformable (31) et isolée électriquement de la première connexion électrique de détection (70D), et
dans lequel le processus de fabrication comprend en outre l'étape de formation de la région de passivation (64B) sur l'électrode de détection intermédiaire (60B) et la première connexion électrique de détection (70D) et la seconde connexion électrique de détection (70E) à travers la région de passivation (64B).

12. Processus de fabrication d'un dispositif MEMS (20) selon la revendication 11, dans lequel l'étape de formation de la région de passivation (64B) sur l'électrode de détection intermédiaire (60B) et la première connexion électrique de détection (70D) et la seconde connexion électrique de détection (70E) à travers la région de passivation (64B) comprend, entre les étapes f et i, les étapes de :
g. formation d'une première couche isolante (110) de matériau isolant sur l'électrode de détection intermédiaire (60B) du capteur de contrainte (50) et sur la première couche piézoélectrique (102) ;
h. formation d'une première tranchée de connexion électrique (112A) à travers la première couche isolante (110) de manière à exposer partiellement l'électrode de détection intermédiaire (60B),
dans lequel l'étape i comprend la formation de la première tranchée de travail (114C) également à travers la première couche isolante (110), la première tranchée de travail (114C) entourant également, orthogonalement au premier axe (Z), une partie de la première couche isolante (110), superposée sur l'électrode de détection intermédiaire (60B) le long du premier axe (Z), qui forme une première couche de passivation isolante (66B) de la région de passivation (64B) de l'élément capteur piézoélectrique (41),
dans lequel l'étape i comprend en outre la formation d'une deuxième tranchée de connexion électrique (114A) à travers la première couche isolante (110) et la première couche piézoélectrique (102) de manière à exposer partiellement la région semi-conductrice supérieure (100C) de la plaquette de travail (100), et
dans lequel l'étape de formation de la région de passivation (64B) sur l'électrode de détection intermédiaire (60B) et la première connexion électrique de détection (70D) et la seconde connexion électrique de détection (70E) à travers la région de passivation (64B) comprend également, entre les étapes i et p, les étapes de :
j. formation d'une troisième couche conductrice (116) de matériau conducteur sur la première couche de passivation isolante (66B) de la région de passivation (64B) de l'élément capteur piézoélectrique (41), sur l'électrode de détection intermédiaire (60B) et sur la région semi-conductrice supérieure (100C) de la plaquette de travail (100) ;
k. formation de motifs, par gravure chimique, sur la troisième couche conductrice (116) de manière à former, à partir de la troisième couche conductrice (116), une région de connexion (70') de la première connexion électrique de détection (70D) dans la première tranchée de connexion électrique (112A), et une région de connexion (70') de la seconde connexion électrique de détection (70E) dans la deuxième tranchée de connexion électrique (114A) ;
l. formation d'une seconde couche isolante (118) de matériau isolant sur la première couche de passivation isolante (66B), la première connexion électrique de détection (70D) et la seconde connexion électrique de détection (70E), la seconde couche isolante (118) définissant une seconde couche de passivation isolante (68B) de la région de passivation (64B) de l'élément capteur piézoélectrique (41) et formant conjointement avec la première couche de passivation isolante (66B) ladite région de passivation (64B) de l'élément capteur piézoélectrique (41) ;
m. formation de troisièmes tranchées de connexion électrique (120A, 120B) à travers la seconde couche isolante (118) de manière à exposer partiellement les régions de connexion (70') de la première connexion électrique de détection (70D) et de la seconde connexion électrique de détection (70E) ; et
n. formation de plots de contact (70") respectifs de la première connexion électrique de détection (70D) et de la seconde connexion électrique de détection (70E), de matériau conducteur, dans les troisièmes tranchées de connexion électrique (120A, 120B) et en contact électrique avec les régions de connexion (70') respectives, chaque plot de contact (70") formant avec la région de connexion (70') respective la première connexion électrique de détection (70D) ou, respectivement, la seconde connexion électrique de détection (70E).

13. Processus de fabrication d'un dispositif MEMS (20) selon la revendication 11, dans lequel l'élément capteur piézoélectrique (41) comprend en outre une électrode de détection supérieure (80) s'étendant sur la région de passivation (64B),
dans lequel l'électrode de détection supérieure (80), la région de passivation (64B) et l'électrode de détection intermédiaire (60B) forment un second condensateur de détection (70'') de la structure de détection active (52B) du capteur de contrainte (50), le premier condensateur de détection (70') et le second condensateur de détection (70") étant électriquement en série l'un avec l'autre, dans lequel la structure de détection active (52B) du capteur de contrainte (50) est configurée pour générer, en réponse à la déformation de la structure déformable (30), une seconde tension électrique de détection entre l'électrode de détection intermédiaire (60B) et l'électrode de détection supérieure (80) du second condensateur de détection (70"), qui est indicative de la déformation de la structure déformable (30), et
dans lequel l'étape de formation de la région de passivation (64B) sur l'électrode de détection intermédiaire (60B) et la première connexion électrique de détection (70D) et la seconde connexion électrique de détection (70E) à travers la région de passivation (64B) comprend :
g. la formation d'une première couche isolante (110) de nitrure d'aluminium sur l'électrode de détection intermédiaire (60B) du capteur de contrainte (50) et sur la première couche piézoélectrique (102) ;
h. la formation d'une première tranchée de connexion électrique (112A) à travers la première couche isolante (110) de manière à exposer partiellement l'électrode de détection intermédiaire (60B),
dans lequel l'étape i comprend la formation de la première tranchée de travail (114C) également à travers la première couche isolante (110), la première tranchée de travail (114C) entourant également, orthogonalement au premier axe (Z), une partie de la première couche isolante (110), superposée sur l'électrode de détection intermédiaire (60B) le long du premier axe (Z), qui forme la région de passivation (64B) de l'élément capteur piézoélectrique (41),
dans lequel l'étape i comprend en outre la formation d'une deuxième tranchée de connexion électrique (114A) à travers la première couche isolante (110) et la première couche piézoélectrique (102) de manière à exposer partiellement la région semi-conductrice supérieure (100C) de la plaquette de travail (100), et
dans lequel l'étape de formation de la région de passivation (64B) sur l'électrode de détection intermédiaire (60B) et la première connexion électrique de détection (70D) et la seconde connexion électrique de détection (70E) à travers la région de passivation (64B) comprend en outre, entre les étapes i et p, les étapes de :
j. formation d'une troisième couche conductrice (116) de matériau conducteur sur la région de passivation (64B) de l'élément capteur piézoélectrique (41), sur l'électrode de détection intermédiaire (60B) et sur la région semi-conductrice supérieure (100C) de la plaquette de travail (100) ; et
k. formation de motifs, par gravure chimique, sur la troisième couche conductrice (116) de manière à former, à partir de la troisième couche conductrice (116), la première connexion électrique de détection (70D) dans la première tranchée de connexion électrique (112A), la seconde connexion électrique de détection (70E) dans la deuxième tranchée de connexion électrique (114A) et l'électrode de détection supérieure (80) sur la région de passivation (64B) de l'élément capteur piézoélectrique (41).

14. Processus de fabrication d'un dispositif MEMS (20) selon l'une quelconque des revendications 9 à 13, dans lequel le dispositif MEMS (20) est de type miroir, et dans lequel le processus de fabrication comprend en outre les étapes de :
- formation d'une structure inclinable (22) suspendue élastiquement sur la cavité (23) ;
- formation d'un premier et d'un second bras de support (25A, 25B) s'étendant entre la structure fixe (24) et des côtés opposés de la structure inclinable (22), le long d'un axe de rotation (A) de la structure inclinable (22) ;
- formation d'une pluralité desdites structures déformables (30) qui font face à des côtés opposés du premier bras de support (25A), s'étendent entre la structure fixe (24) et lesdits côtés opposés du premier bras de support (25A) ou entre la structure fixe (24) et la structure inclinable (22), et sont électriquement commandables pour se déformer mécaniquement en générant ainsi une rotation de la structure inclinable (22) autour de l'axe de rotation (A),
dans lequel les capteurs de contrainte (50) des structures déformables (30) sont opposés l'un à l'autre par rapport à l'axe de rotation (A),
dans lequel, lorsque la structure inclinable (22) tourne autour de l'axe de rotation (A) en raison des structures déformables (30), les capteurs de contrainte (50) des structures déformables (30) subissent des déformations mécaniques respectives et génèrent des signaux de détection respectifs qui sont indicatifs de la rotation de la structure inclinable (22) autour de l'axe de rotation (A) et sont en opposition de phase les uns par rapport aux autres.

15. Procédé de fonctionnement d'un dispositif MEMS (20) selon l'une quelconque des revendications 1 à 8, dans lequel l'actionneur piézoélectrique (38) comporte :
- une région piézoélectrique isolante (51A) de nitrure d'aluminium, s'étendant sur le corps principal déformable (31) latéralement à la région piézoélectrique de détection (51B) ;
- une électrode d'actionnement intermédiaire (60A) de matériau conducteur, s'étendant sur la région piézoélectrique isolante (51A) ;
- une région piézoélectrique d'actionnement (61) de matériau piézoélectrique, s'étendant sur l'électrode d'actionnement intermédiaire (60A) ; et
- une électrode d'actionnement supérieure (62A) de matériau conducteur, s'étendant sur la région piézoélectrique d'actionnement (61),
dans lequel l'électrode d'actionnement intermédiaire (60A), la région piézoélectrique d'actionnement (61) et l'électrode d'actionnement supérieure (62A) forment un condensateur d'actionnement (56) d'une structure d'actionnement active (52A) de l'actionneur piézoélectrique (38),
le procédé de fonctionnement du dispositif MEMS (20) comprenant les étapes de :
- polarisation de l'électrode d'actionnement intermédiaire (60A) et du corps principal déformable (31) à un potentiel électrique de référence ;
- application d'une tension électrique de polarisation entre l'électrode d'actionnement supérieure (62A) et l'électrode d'actionnement intermédiaire (60A) ; et
- acquisition de la première tension électrique de détection générée par le capteur de contrainte (50) et indicative de la déformation de la structure déformable (30).

16. Appareil électronique (90) comprenant un dispositif MEMS (20), selon l'une quelconque des revendications 1 à 8, et un module de commande électronique (92) fonctionnellement couplé au dispositif MEMS (20) et configuré pour acquérir la première tension électrique de détection, générée par le capteur de contrainte (50) et indicative de la déformation de la structure déformable (30), et commander électriquement l'actionneur piézoélectrique (38) sur la base de la première tension électrique de détection.
